(19) Europäisches Patentamt
European Patent Office
Office européen des brevets

(11) **EP 4 258 665 A1**

(12) **EUROPEAN PATENT APPLICATION**

(43) Date of publication:
**11.10.2023 Bulletin 2023/41**

(21) Application number: **22305469.3**

(22) Date of filing: **07.04.2022**

(51) International Patent Classification (IPC):
**H04N 19/52** (2014.01)    **H04N 19/513** (2014.01)
**H04N 19/533** (2014.01)    **H04N 19/577** (2014.01)

(52) Cooperative Patent Classification (CPC):
**H04N 19/52; H04N 19/513; H04N 19/533;
H04N 19/577**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.
Beijing 100000 (CN)**

(72) Inventors:
• **LE LEANNEC, FABRICE
35830 BETTON (FR)**
• **ANDRIVON, PIERRE
35340 LIFFRE (FR)**

(74) Representative: **RVDB Rennes
44 rue Lariboisière
35235 Thorigné-Fouillard (FR)**

(54) **ENCODING/DECODING VIDEO PICTURE DATA**

(57)    The present application relates to inter-predicting blocks of a video picture based on inter-prediction data obtained according to a BM-AMVP-merge mode in which subblock-based affine motion model is used for determining either a first motion information of a BM-AMVP-merge mode, a second motion information of the BM-AMVP-merge mode or both the first and the second motion information of the BM-AMVP-merge mode.

Fig. 19

**Description**

FIELD

The present application generally relates to video picture encoding and decoding. Particularly, but not exclusively, the technical field of the present application is related to inter-predicting of video picture block.

BACKGROUND

The present section is intended to introduce the reader to various aspects of art, which may be related to various aspects of at least one exemplary embodiment of the present application that is described and/or claimed below. This discussion is believed to be helpful in providing the reader with background information to facilitate a better understanding of the various aspects of the present application. Accordingly, it should be understood that these statements are to be read in this light, and not as admissions of prior art.

In the state-of-the-art video compression systems such as HEVC (ISO/IEC 23008-2 High Efficiency Video Coding, ITU-T Recommendation H.265, https://www.itu.int/rec/T-REC-H.265-202108-P/en) or VVC (ISO/IEC 23090-3 Versatile Video Coding, ITU-T Recommendation H.266, https://www.itu.int/rec/T-REC-H.266-202008-I/en, low-level and high-level picture partitioning are provided to divide a video picture into picture areas so-called Coding-Tree Units (CTU) which size may be typically between 16x16 and 64x64 pixels for HEVC and 32x32, 64x64, or 128x128 pixels for VVC.

The CTU division of a video picture forms a grid of fixed size CTUs, namely a CTU grid, which upper and left bounds spatially coincide with the top and left borders of the video picture. The CTU grid represents a spatial partition of the video picture.

In VVC and HEVC, the CTU size (CTU width and CTU height) of all the CTUs of a CTU grid equals a same default CTU size (default CTU width **CTU DW** and default CTU height **CTU DH**). For example, the default CTU size (default CTU height, default CTU width) may equal to 128 (**CTU DW=CTU DH**=128). A default CTU size (height, width) is encoded into the bitstream, for example at a sequence level in the Sequence Parameter Set (SPS).

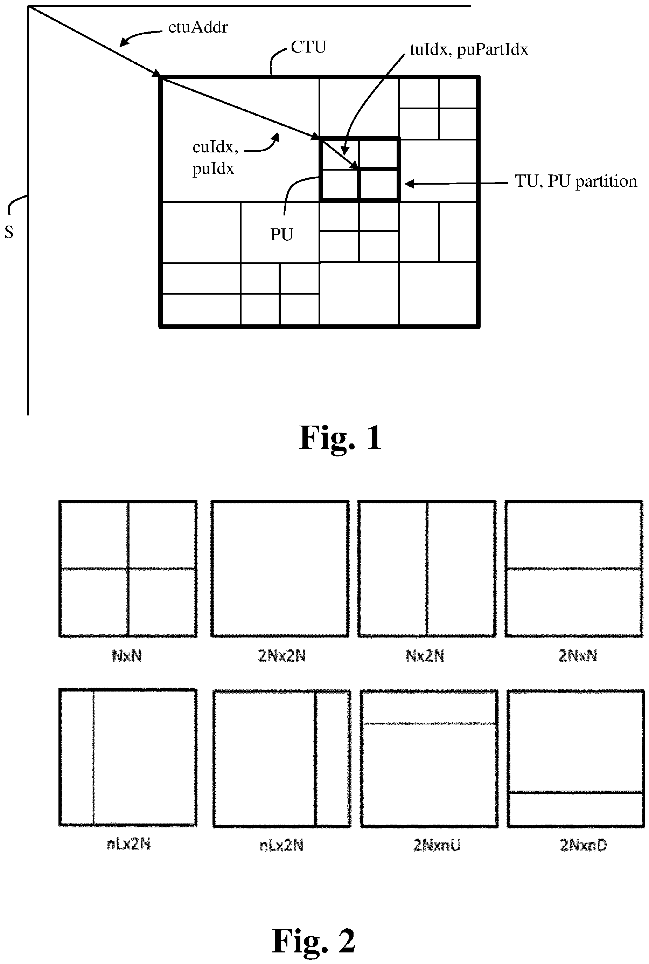

The spatial position of a CTU in a CTU grid is determined from a CTU address **ctuAddr** defining a spatial position of the top-left corner of a CTU from an origin. As illustrated on **Figure 1**, the CTU address may define the spatial position from the top-left corner of a higher-level spatial structure S containing the CTU.

A coding tree is associated with each CTU to determine a tree-division of the CTU.

As illustrated on **Figure 1**, in HEVC, the coding tree is a quad-tree division of a CTU, where each leaf is called a Coding Unit (CU). The spatial position of a CU in the video picture is defined by a CU index **culdx** indicating a spatial position from the top-left corner of the CTU. A CU is spatially partitioned into one or more Prediction Units (PU). The spatial position of a PU in the video picture VP is defined by a PU index **puldx** defining a spatial position from the top-left corner of the CTU and the spatial position of an element of a partitioned PU is defined by a PU partition index **puPartIdx** defining a spatial position from the top-left corner of a PU. Each PU is assigned some intra or inter prediction data.

The coding mode intra or inter is assigned on the CU level. That means that a same intra/inter coding mode is assigned to each PU of a CU, though the prediction parameters varying from PU to PU.

A CU may be also spatially partitioned into one or more Transform Units (TU), according to a quad-tree called the transform tree. Transform Units are the leaves of the transform tree. The spatial position of a TU in the video picture is defined by a TU index **tuldx** defining a spatial position from the top-left corner of a CU. Each TU is assigned some transform parameters. The transform type is assigned on the TU level, and 2D separate transform is performed at TU level during the coding or decoding of a picture block.

The PU Partition types existing in HEVC are illustrated on **Figure** 2. They include square partitions (2Nx2N and NxN), which are the only ones used in both Intra and Inter predicted CUs, symmetric non-square partitions (2NxN, Nx2N, used only in Inter predicted CUs), and asymmetric Partitions (used only in Inter predicted CUs). For instance, the PU type 2NxnU stands for an asymmetric horizontal partitioning of the PU, where the smaller partition lies on the top of the PU. According to another example, PU type 2NxnL stands for an asymmetric horizontal partitioning of the PU, where the smaller partition lies on the top of the PU.

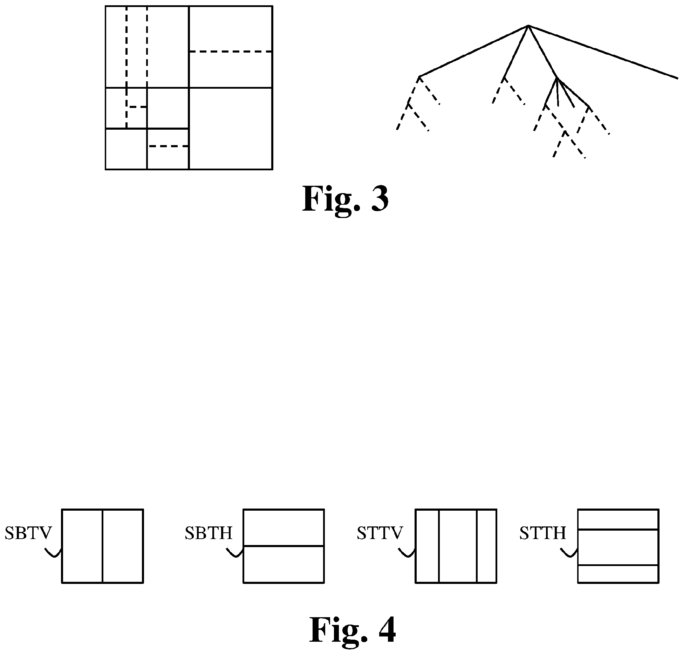

As illustrated on **Figure 3,** in VVC, the coding tree starts from a root node, i.e. the CTU. Next, a quad-tree (or quaternary tree) split divides the root node into 4 nodes corresponding to 4 sub-blocks of equal sizes (solid lines). Next, the quaternary tree (or quad-tree) leaves can then be further partitioned by a so-called multi-type tree, which involves a binary or ternary split according to one of 4 split modes illustrated on **Figure 4**. These split types are the vertical and horizontal binary split modes, noted SBTV and SBTH and the vertical and horizontal ternary split modes SPTTV and STTH.

The leaves of the coding tree of a CTU are CU in the case of a joint coding tree shared by luma and chroma components.

Contrary to HEVC, in VVC, in most cases, CU, PU and TU have equal size, which means coding units are generally not partitioned into PU or TU, except in some specific coding modes.

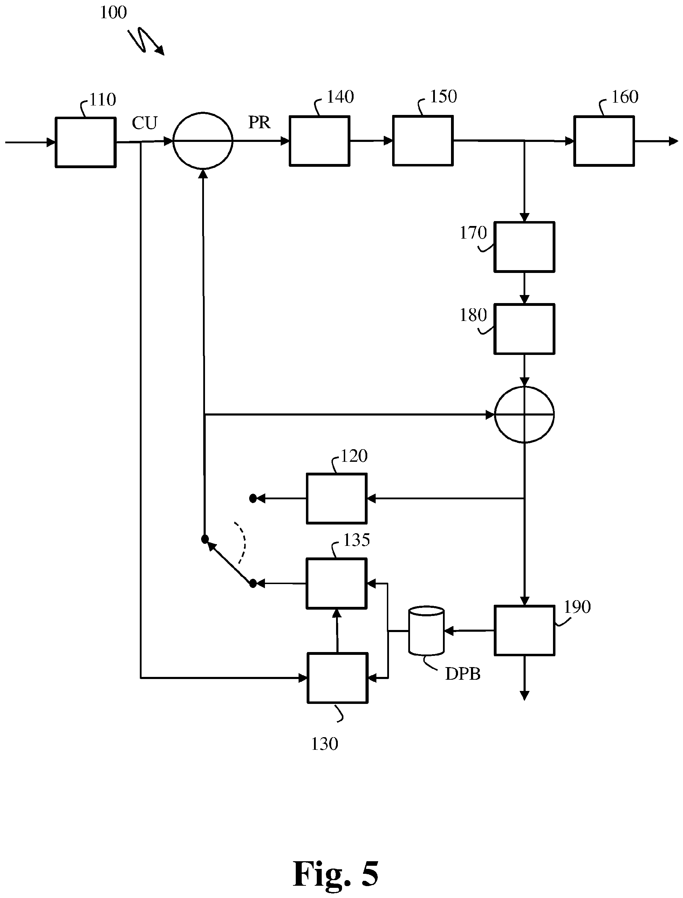

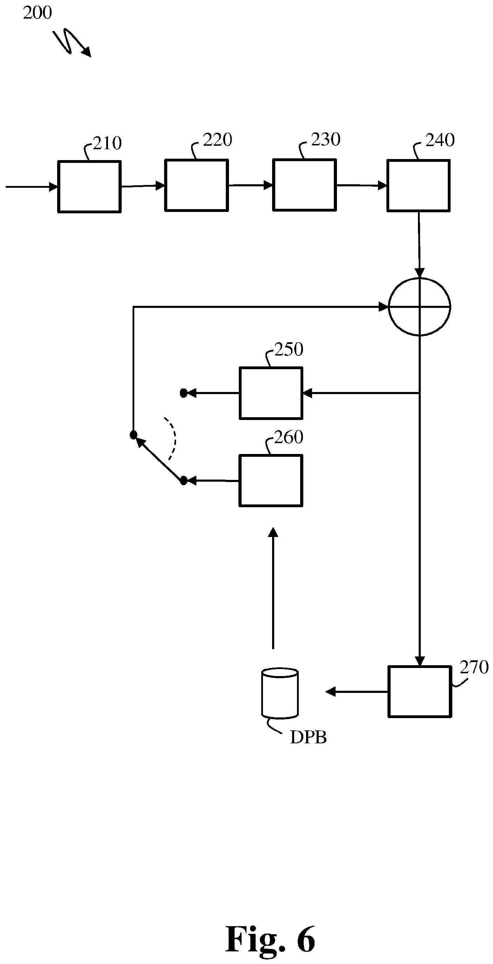

**Figures 5** and **6** provide an overview of video encoding/decoding methods used in current video standard compression systems like HEVC or VVC for example.

**Figure 5** shows a schematic block diagram of steps of a method 100 of encoding a video picture VP in accordance with prior art.

In step 110, a video picture VP is partitioned into blocks of samples and partitioning information data is signaled into a bitstream. Each block comprises samples of one component of the video picture VP. The blocks thus comprise samples of each component defining the video picture VP.

For example, in HEVC, a picture is divided into Coding Tree Units (CTU). Each CTU may be further subdivided using a quad-tree division, where each leaf of the quad-tree is denoted a Coding Unit (CU). The partitioning information data may then comprise data describing the CTU and the quad-tree subdivision of each CTU.

Each block of samples, in short block, may then be either a CU (if the CU comprises a single PU) or a PU of a CU.

Each block is encoded along an encoding loop also called "in loop" using either an intra or inter prediction mode.

Intra prediction (step 120) used intra prediction data. Intra prediction consists in predicting a current block by means of an intra-predicted block based on already encoded, decoded and reconstructed samples located around the current block, typically on the top and on the left of the current block. Intra prediction is performed in the spatial domain.

In inter-prediction mode, motion estimation (step 130) and motion compensation (135) are performed. Motion estimation searches, in one or more reference video picture(s) used to predictively encode the current video picture, a candidate reference block that is a good predictor of the current block. For instance, a good predictor of the current block is a predictor which is similar to the current block. The output of the motion estimation step 130 is inter-prediction data comprising motion information (typically one or more motion vectors and one or more reference video picture indices) associated to the current block and other information used for obtaining a same predicted block at the encoding/decoding side. Next, motion compensation (step 135) obtains a predicted block by means of the motion vector(s) and reference video picture index (indices) determined by the motion estimation step 130. Basically, the block belonging to a selected reference video picture and pointed to by a motion vector may be used as the predicted block of the current block. Furthermore, since motion vectors are expressed in fractions of integer pixel positions (which is known as sub-pel accuracy motion vector representation), motion compensation generally involves a spatial interpolation of some reconstructed samples of the reference video picture to compute the predicted block.

Prediction information data is signaled into the bitstream. The prediction information may comprise prediction mode (intra or inter or skip), intra/inter prediction data and any other information used for obtaining a same predicted CU at the decoding side.

The method 100 selects one prediction mode (the intra or inter prediction mode) by optimizing a rate-distortion trade-off taking into account the encoding of a prediction residual block calculated, for example, by subtracting a candidate predicted block from the current block, and the signaling of prediction information data required for determining said candidate predicted block at the decoding side.

Usually, the best prediction mode is given as being the prediction mode of a best coding mode p* for a current block given by:

$$p^* = \underset{p \in P}{\mathrm{Argmin}}\{RD_{cost}(p)\} \quad (1)$$

where P is the set of all candidate coding modes for the current block, p represents a candidate coding mode in that set, $RD_{cost}(p)$ is a rate-distortion cost of candidate coding mode p, typically expressed as:

$$RD_{cost(p)} = D(p) + \lambda . R(p)$$

$D(p)$ is the distortion between the current block and a reconstructed block obtained after encoding/decoding the current block with the candidate coding mode p, $R(p)$ is a rate cost associated with the coding of the current block with coding mode p, and $\lambda$ is the Lagrange parameter representing the rate constraint for coding the current block and typically computed from a quantization parameter used for encoding the current block.

The current block is usually encoded from a prediction residual block PR. More precisely, a prediction residual block PR is calculated, for example, by subtracting the best predicted block from the current block. The prediction residual block PR is then transformed (step 140) by using, for example, a DCT (discrete cosine transform) or DST (Discrete Sinus transform) type transform, or any other appropriate transform, and the obtained transformed coefficient block is quantized (step 150).

In variant, the method 100 may also skip the transform step 140 and apply quantization (step 150) directly to the prediction residual block PR, according to the so-called transform-skip coding mode.

Quantized transform coefficient block (or quantized prediction residual block) is entropy encoded into the bitstream (step 160).

Next, the quantized transform coefficient block (or the quantized residual block) is de-quantized (step 170) and inverse transformed (180) (or not) as part of the encoding loop, leading to a decoded prediction residual block. The decoded prediction residual block and the predicted block are then combined, typically summed, which provides the reconstructed block.

Other information data may also be entropy encoded in step 160 for encoding a current block of the video picture VP.

In-loop filters (step 190) may be applied to a reconstructed picture (comprising reconstructed blocks) to reduce compression artefacts. Loop filters may apply after all picture blocks are reconstructed. For instance, they consist in deblocking filter, Sample Adaptive Offset (SAO) or adaptive loop filter.

The reconstructed blocks or the filtered reconstructed blocks form a reference picture that may be stored into a decoded picture buffer (DPB) so that it can be used as a reference picture for the encoding of a next current block of the video picture VP, or of a next vide picture to encode.

**Figure 6** shows a schematic block diagram of steps of a method 200 of decoding a video picture VP in accordance with prior art.

In step 210, partitioning information data, prediction information data and quantized transform coefficient block (or quantized residual block) are obtained by entropy decoding a bitstream of encoded video picture data. For instance, this bitstream has been generated in accordance with the method 100.

Other information data may also be entropy decoded for decoding from the bitstream a current block of the video picture VP.

In step 220, a reconstructed picture is divided into current blocks based on the partitioning information. Each current block is entropy decoded from the bitstream along a decoding loop also called "in loop". Each decoded current block is either a quantized transform coefficient block or quantized prediction residual block.

In step 230, the current block is de-quantized and possibly inverse transformed (step 240), to obtain a decoded prediction residual block.

On the other hand, the prediction information data is used to predict the current block. A predicted block is obtained through its intra prediction (step 250) or its motion-compensated temporal prediction (step 260). The prediction process performed at the decoding side is identical to that of the encoding side.

Next, the decoded prediction residual block and the predicted block are then combined, typically summed, which provides a reconstructed block.

In step 270, in-loop filters may apply to a reconstructed picture (comprising reconstructed blocks) and the reconstructed blocks or the filtered reconstructed blocks form a reference picture that may be stored into a decoded picture buffer (DPB) as above discussed (**Figure 5**).

In step 130/135 of **Figure 5** or step 260 of **Figure 6,** an inter-predicted block is defined from inter-prediction data associated with the current block (CU or a PU of a CU) of a video picture. This inter-prediction data comprises motion information that may be represented (coded) according to the so-called whole-block-based AMVP mode (Adaptive Motion Vector Prediction) or the so-called whole-block-based merge mode.

In HEVC, in the whole-block-based AMVP mode, the motion information used to define an inter-predicted block is represented by up-to 2 reference video picture indices respectively associated to up-to 2 reference video picture lists usually denoted L0 and L1. The reference video picture reference list L0 comprises at least one reference video picture and the reference video picture reference list L1 comprises at least one reference video picture. Each reference video picture index is relative to a temporal prediction of the current block. The motion information further comprises up-to 2 motion vectors, each associated with a reference video picture index of one of the two reference video picture lists. Each motion vector is predictively encoded and signaled into the bitstream, i.e. one motion vector difference MVd is derived from the motion vector and one AMVP (Adaptative Motion Vector Predictor) candidate selected from a whole-block-based AMVP candidate list (built at the encoding and decoding side) and MVd is signaled into the bitstream. The index of a selected AMVP candidate in the whole-block-based AMVP candidate list is also signaled in the bitstream.

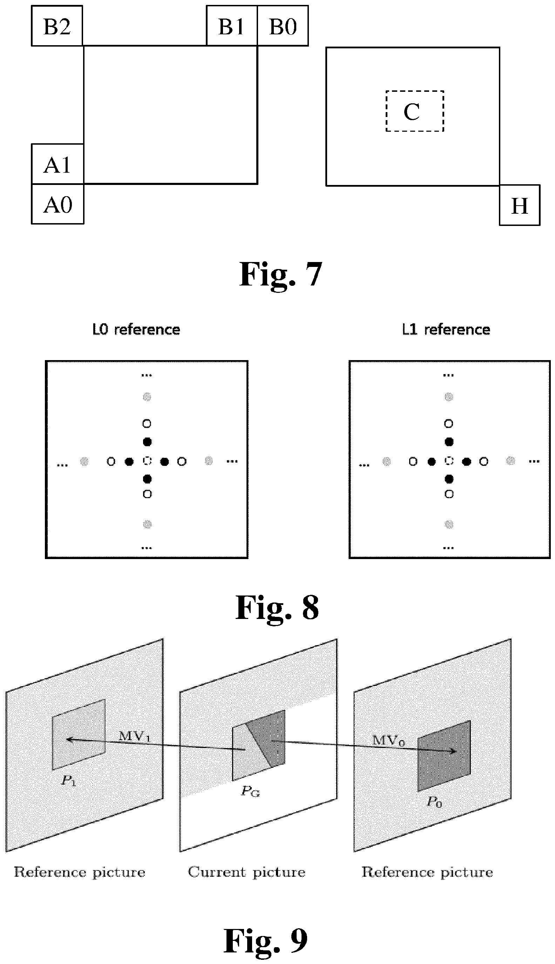

**Figure 7** shows an illustrative example for building a whole-block-based AMVP candidate list used to define an inter-predicted block of a current block of a current video picture.

The whole-block-based AMVP candidate list may comprise two spatial MVP (Motion Vector Predictor) candidates that are derived from the current video picture. A first spatial MVP candidate is derived from motion information associated with inter-predicted blocks, if exist, located at left neighboring positions A0, A1 of the current block, and a second MVP candidate is derived from motion information associated with inter-predicted blocks, if exist, located at top neighboring positions B0, B1 and B2 of the current block. A redundancy check is then conducted between derived spatial MVP candidates, i.e. duplicate derived MVP candidates are discarded. The whole-block-based AMVP candidate list may further comprise a temporal MVP candidate that is derived from motion information associated with a co-located block, if exits, in the reference video picture at spatial position H, or at spatial position C otherwise. The temporal MVP candidate is scaled according to the temporal distances between the current video picture and the reference video picture. Finally, if the whole-block-based AMVP candidate list comprises less than 2 MVP candidates then the whole-block-based AMVP candidate list is padded with zero motion vectors.

In HEVC, in the whole-block-based merge mode, the motion information used to define an inter-predicted block is represented by one merge index of a whole-block-based merge MVP candidate list. Each merge index refers to motion predictor information that indicates which MVP is used to derive the motion information. The motion information is represented by one uni-directional or bi-directional temporal prediction type, up-to 2 reference video picture indices and up-to 2 motion vectors, each associated with a reference video picture index of one of the two reference video picture lists (L0 or L1).

No other information is signaled apart from the merge index. This means the motion vector of current block is set equal to that of the whole block-based MVP candidate indicated by the merge index. Therefore, as opposed to the whole-block-based merge mode, no MVd and no reference picture index is signaled into the bitstream. Only the index of a selected merge candidate in the whole-block-based merge candidate list is also signaled in the bitstream.

Therefore, as opposed to the AMVP mode, no MVd and no reference picture are signaled in the merge mode. Only the merge index is signaled into the bitstream.

The whole-block-based merge MVP candidate list may comprise five spatial MVP candidates that are derived from the current video picture as illustrated on **Figure 7**. A first spatial MVP candidate is derived from motion information associated with an inter-predicted block, if exists, located at left neighboring position A1, a second spatial MVP candidate is derived from motion information associated with an inter-predicted block, if exists, located at above neighboring position B1, a third spatial MVP candidate is derived from motion information associated with an inter-predicted block, if exists, located at above-right neighboring position B0, a forth spatial MVP candidate is derived from motion information associated with an inter-predicted block, if exists, located at left-bottom neighboring position A0 and a fifth spatial MVP candidate is derived from above motion associated with an inter-predicted blocks, if exists, located at left neighboring position B2. A redundancy check is then conducted between derived spatial MVPs, i.e. duplicate derived MVP candidates are discarded. The whole-block-based merge candidate list may further comprise a temporal MVP candidate, named TMVP candidate, that is derived from motion information associated with a co-located block, if exists, in the reference video picture at position H, or at center spatial position "C" otherwise. A redundancy check is then conducted between derived spatial MVPs, i.e. duplicate derived MVP candidates are discarded. Finally, when bi-directional temporal prediction type is used, if the whole-block-based merge candidate list comprises less than 5 MVP candidates, then a combined candidate is added to the whole-block-based merge candidate list. A combined candidate is derived from motion information associated to one reference video picture list and relative to one MVP candidate already present in the whole-block-based merge candidate list, with the motion information associated to another reference video picture list and relative to another MVP candidate already present in the whole-block-based merge candidate list. Finally, if the whole-block-based merge candidate list is still not full (5 merge candidates) then the whole-block-based merge candidate list is padded with zero motion vectors.

Coding the motion information according to VVC provides a richer representation of motion information than in HEVC.

In VVC, motion information may be represented (coded) according to a whole-block-based inter-prediction mode providing a whole-block-based motion representation, or a subblock-based inter-prediction mode providing a subblock-based motion representation.

In VVC, the whole-block-based motion representation may be provided according to either a whole-block-based AMVP mode or a whole-block-based merge mode.

In VVC, in the whole-block-based AMVP mode, the motion information used to define an inter-predicted block is represented as in the HEVC whole-block-based AMVP mode. The whole-block-based AMVP candidate list may comprise spatial and temporal MVP candidates as in HEVC, if exist. The whole-block-based AMVP candidate list may further comprise four additional HMVP (History-Based Motion Vector Prediction) candidates, if exist. Finally, if the whole-block-based AMVP candidate list comprises less than 2 MVP candidates then the whole-block-based AMVP candidate list is padded with zero motion vectors.

HMVP candidates are derived from previously coded MVPs associated with adjacent or non-adjacent blocks relative to the current block. To do so, a table of HMVP candidates is maintained at both encoder and decoder sides and updated on the fly, as a first-in-first-out (FIFO) buffer of MVPs. There are up to five HMVP candidates in the table. After coding one block, the table is updated by appending the associated motion information to the end of the table as a new HMVP candidate. The FIFO rule is applied to manage the table wherein, in addition to the basic FIFO mechanism, the redundant candidate in the HMVP table is firstly removed instead of the first one. The table is reset at each CTU row to enable parallel processing.

Aside from the whole-block-based AMVP candidate list, the whole-block-based AMVP mode employs new tools compared to HEVC which are listed below:

- SMVD (Symmetric Motion Vector Difference): SMVD consists, for a bi-directional block, in setting the MVds associated to one reference video picture list equal to the opposite of the MVd associated to the other reference video picture list for a current block. Moreover, the reference video pictures used in SMVD mode are derived by the decoder with some pre-defined rules. SMVD enables reducing the rate cost for coding MVd and reference picture index information and is selected at block level.

- AMVR (Adaptive Motion Vector Resolution). The AMVR tool allows signaling the MVds with quarter-pel, half-pel, integer-pel or 4-pel luma sample resolutions. This allows saving bits in the coding of MVd information also. In AMVR, the motion vector resolution is chosen at block level.

- BCW (Bi-prediction with coding unit weights) enables bi-prediction of a block with unequal weights, signaled at block level.

Finally, the internal motion vector representation is achieved at 1/16-luma sample accuracy, instead of ¼-luma sample accuracy in HEVC.

In VVC, in the whole-block-based merge mode, the motion information used to define an inter-predicted block is represented as in the HEVC whole-block-based merge mode.

The whole-block-based merge candidate list is different from the whole-block-based merge candidate list used in HEVC.

In VVC, the whole-block-based merge candidate list may be built for MMVD (Merge Mode with MV Difference) mode, GPM (Geometric Partitioning Mode) or CIIP (Combined Intra/Inter Prediction) mode.

MMVD mode allows coding a limited motion vector difference (MVd) on top of a selected merge candidate, to represent the motion information associated with an inter-predicted block. MMVD coding is limited to 4 vector directions and 8 magnitude values, from ¼ luma sample to 32-luma sample as illustrated on **Figure 8**. MMVD mode provides an intermediate accuracy level, hence an intermediate trade-off between rate cost and MV (Motion Vector) accuracy to signal the motion information.

GPM consists in partitioning a current block PG into two motion partitions MV0 and MV1 along a straight line as illustrated on **Figure 9**. Each motion vector MV0 and MV1 points to a block P0, P1 of a reference video picture of one of the two reference video pictures lists.

The geometric partition may be non-rectangular or rectangular. If rectangular, an asymmetric splitting is done, avoiding redundancy with CU-level binary splitting. The use of GPM is signalled with a CU-level flag as a particular whole-block-based merge mode.

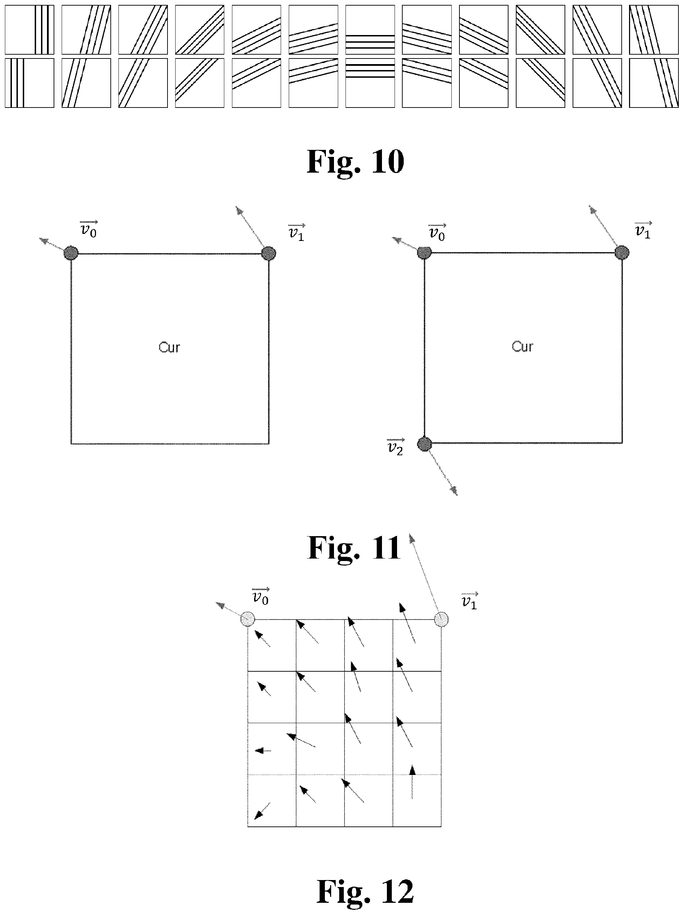

The split line orientation and position relative to the current block center is signaled at CU level through a dedicated GPM index. In total 64 partitions are supported by geometric partitioning mode for each possible CU size $w \times h = 2^m \times 2^n$ with $m, n \in \{3 \cdots 6\}$ excluding 8x64 and 64x8. For instance, **Figure 10** illustrates various split lines that can be achieved, at different position offsets from the CU center, and for various split line angles.

Each part of a geometric partition in the current block PG is inter-predicted using its own motion. Only uni-prediction is allowed for each partition, that is, each part has one motion vector and one reference video picture index. The uni-directional inter-prediction constraint is applied to ensure that only two motion compensated predictions are needed for each current block PG, similarly to the conventional bi-directional inter-prediction.

The motion vector MV0 and MV1 of each partition is derived from two merge indices, respectively for each partition.

After predicting each of part of the geometric partition, the sample values along the geometric partition edge are adjusted using a blending processing with adaptive weights. This is the prediction signal for the whole current block PG and transform and quantization process will be applied to the whole current block PG (not for each partition) as in other whole-block-based prediction modes.

CIIP consists in a combining an inter-prediction signal with an intra-prediction signal to predict a current block. The inter-prediction signal in the CIIP mode is derived using the same inter-prediction process as applied to the whole-block-based merge mode; and the intra-prediction signal is derived following a regular intra-prediction process with a planar mode. Then, the intra and inter prediction signals are combined using weighted averaging, where the weight value is calculated depending on the coding modes of the top and left neighbouring blocks:

$$PCIIP = (Wmerge \times Pmerge + Wintra \times Pintra + 2) \gg 2$$

The sums of weights $W_{merge}$ and $W_{intra}$ is equal to 4 and these weights are constant in the whole current block.

In summary, in VVC, the whole-block-based merge candidate list may comprise spatial MVP candidates similar to HEVC except the two first candidates are swapped : candidate B1 is considered before candidate A1 during the whole-block based merge candidate list construction. The whole-block-based merge candidate list may further comprise TMVP similarly to HEVC, HMVP candidates as in the VVC AMVP mode. Several HMVP candidates are inserted into the whole-block-based merge candidate list so that the merge candidate list reaches the maximum allowed number of MVP candidates (minus 1). The whole-block-based merge candidate list may also comprise up-to 1 pairwise average candidates computed as follows: the two first merge candidates present in the whole-block-based merge candidate list are considered and their motion vectors are averaged. This averaging is computed separately for each reference video picture list L0 and L1. So, if both MVP are bi-directional, motion vectors related to both lists L0 and L1 are averaged. If only one motion vector is present in a reference video picture list, it is taken as is to form the pairwise candidate. Finally, if the merge candidate list does not reach the maximum allowed number of MVP candidates, then the whole-block-based merge candidate list is padded with zero motion vectors.

In VVC, the subblock-based inter-prediction basically consists in dividing the current block into subblocks, typically into 4x4 or 8x8 luma samples subblocks, and the subblock-based motion representation used to define an inter-predicted block is represented by motion information associated with all the subblocks.

In HEVC, only translation motion model is applied for motion compensated temporal prediction. Such translational motion is not able to capture some types of motion like zoom in, zoom out, rotation, perspective motions and irregular motions.

To solve this problem, in VVC, subblock-based affine motion mode can be used at CU level. As shown on **Figure 11**, the affine motion field of a current block is defined from translational motion vectors of two control points (4-parameter affine motion model) or three control points (6-parameter affine motion model). On **Figure 11**, the translational motion vectors $v_0$, $v_1$, $v_2$ of control points located at corners of the current block are used to derive the affine motion field of a current block.

For the 4-parameter affine motion model, motion vector ($mv_x$, $mv_y$) at sample location *(x, y)* in a current block is derived as:

$$\begin{cases} mv_x = \frac{mv_{1x}-mv_{0x}}{W}x + \frac{mv_{0y}-mv_{1y}}{W}y + mv_{0x} \\ mv_y = \frac{mv_{1y}-mv_{0y}}{W}x + \frac{mv_{1x}-mv_{0x}}{W}y + mv_{0y} \end{cases} \qquad (1)$$

where ($mv_{0x}$, $mv_{0y}$) is the translational motion vector of the top-left corner control point, and ($mv_{1x}$, $mv_{1y}$) is the motion vector of the top-right corner control point.

For the 6-parameter affine motion model, motion vector at sample location (x, *y*) in a 4x4 subblock of the current block is derived as:

$$\begin{cases} mv_x = \frac{mv_{1x}-mv_{0x}}{W}x + \frac{mv_{2x}-mv_{0x}}{H}y + mv_{0x} \\ mv_y = \frac{mv_{1y}-mv_{0y}}{W}x + \frac{mv_{2y}-mv_{0y}}{H}y + mv_{0y} \end{cases} \qquad (2)$$

where ($mv_{0x}$, $mv_{0y}$) is the translational motion vector of the top-left corner control point, ($mv_{1x}$, $mv_{1y}$) is the translational motion vector of the top-right corner control point, and ($mv_{2x}$, $mv_{2y}$) is the translational motion vector of the bottom-left corner control point.

To derive motion vector of each subblock (usually luma subblock) of the current block, the motion vector of the center sample of each subblock is calculated according to equations 1 or 2, as shown in **Figure 12**, and rounded to 1/16 fraction accuracy. Then, motion compensation interpolation filters are applied to generate a prediction of each subblock with derived motion vector leading to an inter-prediction of the current block. The subblock size in chroma-components is also 4x4. The MV of a 4x4 chroma subblock is calculated as the average of the MVs of the top-left and bottom-right luma subblocks in the collocated 8x8 luma region.

In the following, a transactional motion vector of a control point is named CPMV.

The sub-block-based motion representation used to define an inter-predicted block may be provided according to a subblock-based affine AMVP mode or a subblock-based affine merge mode.

The subblock-based affine merge mode can be applied for a current block with both width and height larger than or equal to 8. An affine merge candidate list of up-to 5 subblock-based motion candidates is used. Subblock-based motion candidates are CPMVP candidates based on motion information associated with spatial neighboring blocks. An index of a selected subblock-based motion candidate of the affine merge candidate list is signalled into the bitstream. Finally, if the affine merge candidate list is not full (5 CPMVP candidates) then the affine merge candidate list is padded with zero motion vectors.

CPMVP candidates may be either so-called inherited CPMVP candidates that are derived by extrapolating affine motion model (CPMVs) of neighbour blocks or so-called constructed CPMVP that are CPMVP candidates derived by combining translation MVs of neighbour subblocks.

In VVC, there are at most two inherited CPMVP candidates, which are derived by extrapolating affine motion model of a left neighbour block and affine model of an above neighbour block. For the left CPMVP candidate, if an affine motion model of the left neighbour A0 exists, the left CPMVP candidate is extrapolated from CPMVs of said affine motion model. Otherwise, the left CPMVP candidate is extrapolated from CPMVs of the affine motion model of the left neighbour A1 if exists. For the above CPMVP candidate, if the affine motion model of the above neighbour B0 exists, the above CPMVP candidate is extrapolated from CPMVs of said affine motion model. Otherwise, if the affine motion model of the above neighbour B1 exists, the above CPMVP candidate is extrapolated from CPMVs of said affine motion model. Otherwise, the CPMVP candidate is extrapolated from CPMVs of the affine motion model of the left neighbour B2 if exists.

Extrapolating affine motion models of neighbour blocks means deriving inherited CPMVP candidates by combining CPMVs of said affine motion models.

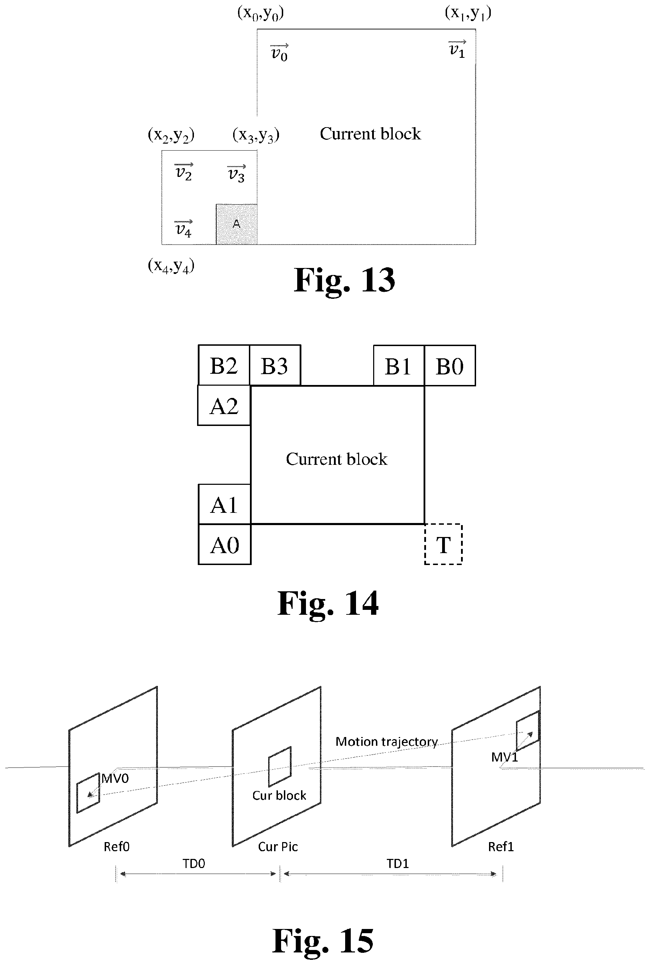

As shown in **Figure 13**, if an affine motion model of a left-bottom neighbor subblock A exists, the translational motion vectors $v_2$, $v_3$ and $v_4$ of said affine motion model that are relative to the top left corner, above-right corner and left-bottom corner of a neighbor block which contains the subblock A are attained. When subblock A is coded with the above 4-parameter affine model, the left CPMVP candidate of the current block is inherited (calculated) by combining the translational motion vectors $v_2$, and $v_3$, according to the two following equations.

$$\vec{v_0} = \vec{v_2} + (\vec{v_4} - \vec{v_2})\left(\frac{Y_{curr} - Y_{neighb}}{H_{neighb}}\right) + (\vec{v_3} - \vec{v_2})\left(\frac{X_{curr} - X_{neighb}}{W_{neighb}}\right)$$

$$\vec{v_1} = \vec{v_0} + (\vec{v_3} - \vec{v_2})\left(\frac{W_{curr}}{W_{neighb}}\right)$$

where $(X_{curr}, Y_{curr})$ is the position of current block, $(X_{neighb}, Y_{neighb})$ is the position of the neighboring block, and $(W_{neighb}, H_{neighb})$ is the size of the neighboring block.

In case that subblock A is coded with the above 6-parameter affine model, the three CPMVs of the current block are calculated by combining the translational motion vectors $v_2$, $v_3$ and $v_4$ according to the following equations.

$$\vec{v_0} = \vec{v_2} + (\vec{v_4} - \vec{v_2})\left(\frac{Y_{curr} - Y_{neighb}}{H_{neighb}}\right) + (\vec{v_3} - \vec{v_2})\left(\frac{X_{curr} - X_{neighb}}{W_{neighb}}\right)$$

$$\vec{v_1} = \vec{v_0} + (\vec{v_3} - \vec{v_2})\left(\frac{W_{curr}}{W_{neighb}}\right)$$

$$\vec{v_2} = \vec{v_0} + (\vec{v_4} - \vec{v_2})\left(\frac{H_{curr}}{H_{neighb}}\right)$$

In VVC, constructed affine candidates are derived by combining non-affine MVs of neighbor blocks. MVs of control points are derived from spatial and temporal neighbor subblocks.

**Figure 14** shows an example for deriving constructed CPMVP candidates by combining translational MVs of neighbor blocks.

$CPMV_k$ (k=1, 2, 3, 4) represents the translational MV associated with a k-th control point of the current block. For $CPMV_1$, if the translational MV of the neighbor subblock B2 exists, $CPMV_1$ equals said translation MV. Otherwise, if the translational MV of the neighbor subblock B3 exists, $CPMV_1$ equals said translation MV. Otherwise, if the translational MV of the neighbor subblock A2 exists, $CPMV_1$ equals said translation MV. For $CPMV_2$, if the translational MV of the neighbor subblock B1 exists, $CPMV_2$ equals said translation MV. Otherwise, if the translational MV of the neighbor subblock B0 exists, $CPMV_2$ equals said translation MV. For $CPMV_3$, if the translational MV of the neighbor subblock A1 exists, $CPMV_3$ equals said translation MV. Otherwise, if the translational MV of the neighbor subblock A0 exists, $CPMV_3$

equals said translation MV. For $CPMV_4$, if the translational MV of a co-located neighbor subblock in a reference video picture at position T exists, $CPMV_4$ equals said translation MV.

Constructed CPMVP candidates are derived by combining $CPMV_k$ as follows: if $CPMV_1$, $CPMV_2$ and $CPMV_3$ exist, the constructed CPMVP candidate is derived by combining $\{CPMV_1, CPMV_2, CPMV_3\}$. Otherwise, if $CPMV_1$, $CPMV_2$ and $CPMV_4$ exist, the constructed CPMVP candidate is derived by combining $\{CPMV_1, CPMV_2, CPMV_4\}$. Otherwise, if $CPMV_1$, $CPMV_3$ and $CPMV_4$ exist, the constructed CPMVP candidate is derived by combining $\{CPMV_1, CPMV_3, CPMV_4\}$. Otherwise, if $CPMV_2$, $CPMV_3$ and $CPMV_4$ exist, the constructed CPMVP candidate is derived by combining $\{CPMV_2, CPMV_3, CPMV_4\}$. Otherwise, if $CPMV_1$ and $CPMV_2$ exist, the constructed CPMVP candidate is derived by combining $\{CPMV_1, CPMV_2\}$. Otherwise, if $CPMV_1$ and $CPMV_3$ exist, the constructed CPMVP candidate is derived by combining $\{CPMV_1, CPMV_3\}$.

To avoid motion scaling in case $CPMV_k$s point to different reference video pictures, combinations of control point MVs associated with said $CPMV_k$s are discarded.

Combining 3 $CPMV_k$s leads to a 6-parameter affine motion model (equation 2) and combining of 2 CPMVs leads to a 4-parameter affine motion model (equation 1).

The subblock-based affine merge mode uses an affine merge candidate list of CPMVP candidates. A merge index *mergeIdx* indicates the CPMVP candidate used to derive the motion information of a current block. A best CPMVP candidate in the affine merge candidate list is determined for the current block, as the one which minimizes the rate distortion costs for the coding of a given block.

The affine merge candidate list may comprise SbTMVP (subblock-based Temporal Motion Vector Prediction) candidate and/or inherited CPMVP candidates and/or constructed CPMVP candidates as discussed above. Finally, if the affine merge candidate list does not reach a maximum allowed number of candidates, then the affine merge candidate list is padded with zero motion vectors.

SbTMVP candidate may be derived as follows: similar to TMVP candidate, SbTMVP candidate is derived from motion information of co-located subblock, if exists, in a reference video picture. SbTMVP candidate differs from TMVP candidate in the following two main aspects:

- TMVP predicts motion at CU-level, but SbTMVP predicts motion at subblock level (sub-CU-level);

- TMVP fetches the temporal motion vectors from the co-located block in the reference video picture, SbTMVP applies a motion shift before fetching the temporal motion information from the reference video picture, where the motion shift is obtained from the motion vector from one of the spatial neighboring subblocks of the current block.

The subblock-based affine AMVP mode can be applied for current blocks with both width and height larger than or equal to 16 in VVC. In subblock-based affine AMVP mode, CPMV differences Mvds between MVs of control points located at corners of the current block and their CPMVPs (Control Point Motion Vector Predictors) are signaled into the bitstream. Finally, a CPMVP index referring to a CPMVP candidate of an affine AMVP candidate list is signaled into the bitstream.

The CPMVPs used to predict the MVs of control points located at corners of the current block are derived from the affine AMVP candidate list comprising two CPMVP candidates.

The affine AMVP candidate list may comprise inherited CPMVP candidates and/or constructed CPMVP candidates.

In the ECM (Enhanced Compression Model beyond VVC, https://jvet-experts.org/doc_end_user/documents/24_Teleconference/wg11/JVET-X2025-v2.zip), the motion information used to define an inter-predicted block may also be represented according to the so-called Bilateral Matching AMVP-merge mode (BM-AMVP-merge mode).

The BM-AMVP-merge mode is allowed when at least one reference video picture is available in one reference picture list (along one so-called inter-direction) of the video picture comprising the current block and at least one reference video picture is available in the other reference picture list (along an other inter-direction) of the video picture. In the BM-AMVP-merge mode, the motion information used to define an inter-predicted block comprises a first motion information associated with a reference video picture of a reference video picture list, and a second motion information associated with a reference video picture of another reference video picture list.

In the BM-AMVP-merge mode as defined in ECM, the first motion information is a first whole-block-based motion vector (MV) associated with a reference video picture of a reference video picture list associated with an inter-direction and the second motion information is a second whole-block-based MV associated with a reference video picture of another reference video picture list associated with the other inter-direction.

The first whole-block-based MV is represented as discussed above in relation with the whole-block-based AMVP mode in VVC, thus is derived from a whole-block-based motion vector predictor (MVP), a signaled reference picture index and a signaled motion vector difference, obtained through the whole-block-based AMVP mode.

The second whole-block-based MV is represented as discussed above in relation with the whole-block-based merge mode, thus is derived from the whole-block-based motion vector predictor (MVP) obtained through the whole-block-based merge mode.

The whole-block-based MVP used to derive the second whole-block-based MV (i.e. a mergeIdx index in the whole-block-based merge MVP candidate list indicated by refListMerge index) is derived from the following bilateral matching method which minimizes a bilateral matching cost Bmcost given by:

$$mergeIdx = \underset{mIdx \ in \ merge \ list}{\mathrm{ArgMin}} \ \big( Bmcost(MvpIdx[refListAmvp], mIdx[refListMerge]) \big)$$

where $mIdx[refListMerge]$ is an index that refers to an MVP candidate of the whole-block-based merge MVP candidate list indicated by refListMerge index, and MvpIdx[refListAmvp] is the whole-block-based MVP used to predict the first whole-block-based MV of the BM-AMVP-merge mode.

For every MVP candidate in the whole-block-based merge MVP candidate list, the bilateral matching cost is calculated using said MVP candidate and MvpIdx[refListAmvp]. The MVP candidate with the smallest cost is selected as being the whole-block-based MVP used to derive the second whole-block-based MV.

A bilateral matching refinement method, illustrated on **Figure 15,** is then applied to the current block with the motion vectors derived through the whole-block based AMVP mode (MV0 on **Figure 15**) and the second whole-block-based MV (MV1 on **Figure 15**) derived through the whole-block-based merge mode, as starting points. Its principle is the following one. In bi-prediction operation, refined motion vectors are derived around the two initial motion vectors MV0 and MV1 pointing to reference blocks RefO and Ref1 of reference video pictures of the reference video picture lists L0 and L1, by minimizing the bilateral matching cost between the two reference blocks RefO and Ref1. Basically, local search is to derive integer sample precision DeltaMV. The local search typically applies a nxn (n is an integer value) square search pattern to loop through a search range [-sHor, sHor] in horizontal direction and [-sVer, sVer] in vertical direction. The bilateral matching cost is calculated as a sum of mvDistanceCost and sadCost, where mvDistanceCost is representative of a motion vector coding cost and increases as a function of the motion vector magnitude and sadCost is a metrics providing differences between the two reference blocks RefO and Ref1. For example, sadCost is a sum of absolute difference of samples of said two reference blocks RefO and Ref1. When the bilateral matching cost at the center point of the nxn search pattern has the minimum cost, the local search is terminated. Otherwise, the current minimum cost search point becomes the new center point of the nxn search pattern and continue to search for the minimum cost, until it reaches the end of the search range.

Given the motion vector displacement deltaMV issued from this iterative search, the refined motion vectors after the refinement pass is then derived as:

- $$MV0\_refined = MV0 + deltaMV$$

- $$MV1\_refined = MV1 - deltaMV$$

Encoding (writing) motion information associated with a current block into a bitstream and parsing (decoding) motion information associated with said current block from a bitstream are similar methods because conditions checked along the parsing (decoding) method are also conditions checked along the encoding method.

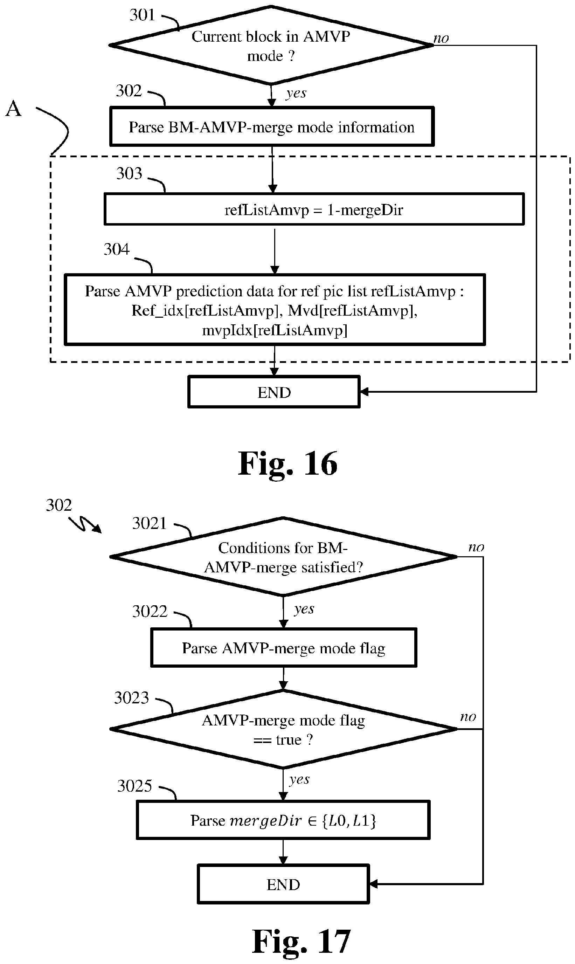

In the following, **Figures 16** and **17** show parsing of motion information from a bitstream but one skilled in the art would easily deduce encoding (writing) of motion information into the bitstream from description of those Figures by replacing the term "parsing", "parse" by "writing", "write".

**Figure 16** shows a parsing method of motion information associated with a current block predicted according to BM-AMVP-merge mode from a bitstream in accordance with prior art.

In step 301, the parsing method checks whether the current block is predicted according to the AMVP mode. If the current block is not predicted according to the AMVP mode, then the parsing method according to the BM_AMVP merge mode, which is a particular sub-case of the AMVP mode in the prior art, does not take place.

Otherwise, in step 302, a BM-AMVP-merge mode information is parsed from the bitstream. Step 302 is detailed on **Figure 17**.

**Figure 17** shows a parsing of BM-AMVP-merge mode information from the bitstream (step 302) in accordance with prior art.

In step 3021, conditions to apply a BM-AMVP-merge mode to the current block are checked. These conditions are fulfilled, for example, when a slice that comprises the video picture that comprises the current block has at least one reference picture in the past of the video picture and at least one reference video picture in the future of the video picture.

In step 3022, AMVP-merge mode flag is parsed from the bitstream. The AMVP-merge mode indicates if the current block is predicted by using the BM-AMVP-merge mode.

In step 3023, AMVP-merge mode flag is checked.

If AMVP-merge mode flag is false, the parsing is terminated.

If the AMVP-merge mode flag is true, in step 3025, an inter-direction data mergeDir is parsed from the bitstream. MergeDir is a reference video picture list index, typically equals to 0 or 1 (0 indicates a reference video picture list L0 and 1 indicates a reference video picture list L1), that indicates a reference video picture list for which the current block uses the merge mode.

Next steps of **Figure 16** consist in parsing AMVP inter-prediction data from the bitstream, used to predict current block from a reference video picture of the reference video picture list indicated by (1-mergeDir). To do so, in step 303, the reference video picture list index refListAmvp is set to (1-mergeDir) to indicate a reference video picture list that uses AMVP mode.

In step 304, AMVP inter-prediction data, i.e. reference video picture index Ref_idx[refListAmvp], AMVP candidate index Mvpldx[refListAmvp] and motion vector difference Mvd[refListAmvp], are parsed from the bitstream for the reference video picture list indicated by refListAmvp.

Note that concerning the AMVP candidate index Mvpldx[refListAmvp], it is being parsed/written from/to the bitstream at step 304. In a variant, it may be derived through a template matching procedure that searches for the AMVP candidate minimizing a template cost, performed identically on the encoder and on the decoder sides. As know by the man skilled in the art, the template cost corresponds a distortion calculated between a reconstructed picture area above and on the left of current block in current picture, and the correspond spatial area in the considered reference video picture, above and on the left of the reference block pointed to by the motion vector of the considered AMVP candidate.

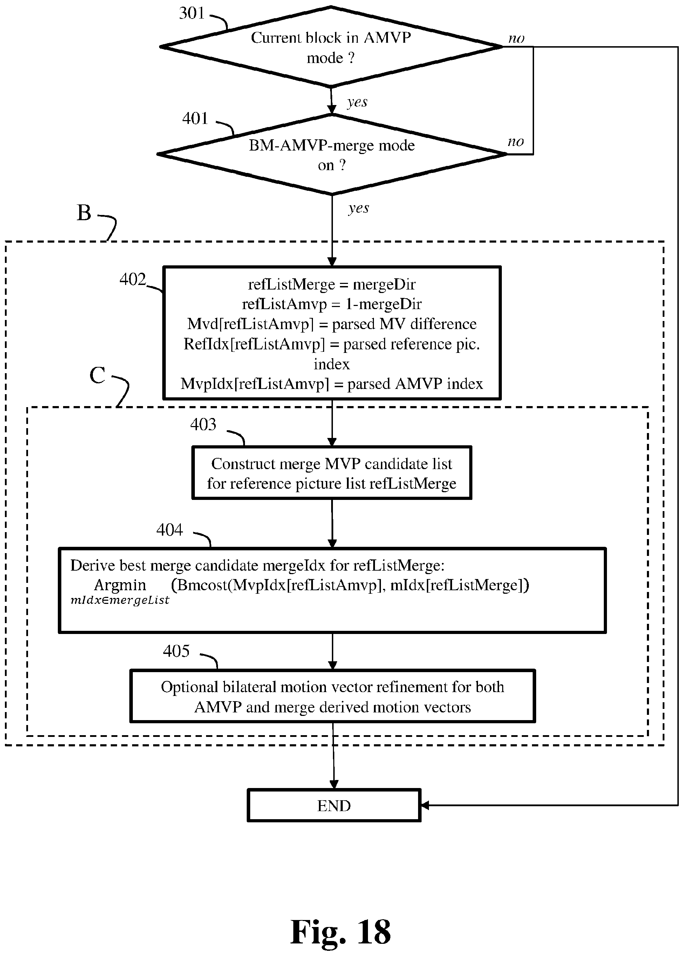

**Figure 18** shows a motion information derivation method for a current block predicted according to BM-AMVP-merge mode in accordance with prior art.

The motion derivation method aims at reconstructing the inter prediction data associated to the current block in order to construct an inter-predicted block of the current block. The motion derivation method runs both at the encoding and decoding sides.

In step 301, the motion derivation method checks whether the current block is predicted according to the AMVP mode. If the current block is not predicted according to the AMVP mode, then the motion derivation method according to the BM_AMVP merge mode, which is a particular sub-case of the AMVP mode in the prior art, does not take place.

Otherwise, in step 401, the motion derivation method checks whether an BM-AMVP-merge mode is active for current block. If not, the motion derivation method according to BM-AMVP merge mode is terminated.

Otherwise, in step 402, refListMerge and refListAMVP indices are assigned to the inter-directions (reference video picture lists indices mergeDir and (1-mergeDir)), issued from the parsing of **Figure 16,** for which Merge and AMVP modes are respectively used. Also, reference video picture index Refldx[refListAmvp], Mvpldx[refListAmvp] and motion vector difference Mvd[refListAmvp] are obtained from the parsing process of **Figure 16**.

In step 403, a whole-block-based merge MVP candidate list is constructed for reference video pictures of a reference video picture list indicated by refListMerge.

In step 404, a whole-block-based MVP used to derive the second whole-block-based MV is selected from the bilateral matching method as discussed above.

In step 405, the first whole-block-based MV of the BM-AMVP-merge mode derived from the whole-block-based MVP used Mvpldx[refListAMVP] and the second whole-block-based MV derived from the selected whole-block-based MVP are refined from the bilateral matching refinement method as discussed above in relation with **Figure 15,** and the motion information of the current block is derived as the refined motion vectors.

The problem solved by the present invention is to further increase the compression efficiency of existing video coding standards like HEVC, VVC or the ECM.

In particular, the problem solved is to further improve the efficiency of the motion data representation of a video picture block.

At least one exemplary embodiment of the present application has been devised with the foregoing in mind.

SUMMARY

The following section presents a simplified summary of the at least one exemplary embodiment in order to provide a basic understanding of some aspects of the present application. This summary is not an extensive overview of an exemplary embodiment. It is not intended to identify key or critical elements of an exemplary embodiment. The following summary merely presents some aspects of the at least one exemplary embodiment in a simplified form as a prelude to the more detailed description provided elsewhere in the document.

According to a first aspect of the present application, there is provided a method of encoding a video picture into a bitstream of encoded video picture data, the method comprising a bilateral matching AMVP-merge mode for determining an inter-predicted block of a block of the video picture, said inter-predicted block being derived from a first motion information associated with a reference video picture of a reference picture list, and from a second motion information associated with a reference video picture of another reference picture list, wherein subblock-based motion model is used for determining either the first motion information or the second motion information or both.

According to a second aspect of the present application, there is provided a method of decoding a video picture into a bitstream of encoded video picture data, the method comprising a bilateral matching AMVP-merge mode for determining an inter-predicted block of a block of the video picture, said inter-predicted block being derived from a first motion information associated with a reference video picture of a reference picture list, and from a second motion information associated with a reference video picture of another reference picture list, wherein subblock-based motion model is used for determining either the first motion information or the second motion information or both.

In one exemplary embodiment, the method may further comprise encoding/decoding a syntax element indicating whether the subblock-based affine motion model is used for determining the first motion information.

In one exemplary embodiment, the method may further comprise encoding/decoding a syntax element (sub_block_merge flag) indicating whether the subblock-based affine motion model is used for determining the second motion information.

In one exemplary embodiment, the method may further comprise encoding/decoding a syntax element indicating whether the subblock-based affine motion model is used for determining the first and second motion information.

In one exemplary embodiment, the method may further comprise encoding/decoding a motion vector predictor index (mldx) of a motion vector predictor index list, and the second motion information is determined from said motion vector predictor index.

In one exemplary embodiment, the first motion information may be derived from an affine AMVP motion coding mode.

In one exemplary embodiment, deriving a representation of first motion information from an affine AMVP motion coding mode may comprise constructing a candidate list of affine motion predictors, where each candidate includes affine motion information associated with a reference picture list associated with the first motion information.

In one exemplary embodiment, the second motion information may be derived from a sub-block merge motion coding mode.

In one exemplary embodiment, deriving a representation of second motion information from a sub-block merge motion coding mode may comprise constructing a candidate list of sub-block-based merge motion predictors, where each candidate includes sub-block-based motion information associated with a reference picture list associated with second motion information.

In one exemplary embodiment, the sub-block-based merge motion predictors may only contain affine merge motion predictors.

According to a third aspect of the present application, there is provided a bitstream of encoded video picture data generated by one of the method according to the first aspect of the present application.

According to a fourth aspect of the present application, there is provided an apparatus comprising means for performing one of the method according to the first and/or second aspect of the present application.

According to a fifth aspect of the present application, there is provided a computer program product including instructions which, when the program is executed by one or more processors, causes the one or more processors to carry out a method according to the first and/or second aspect of the present application.

According to a sixth aspect of the present application, there is provided a non-transitory storage medium carrying instructions of program code for executing a method according to the first and/or second aspect of the present application.

The specific nature of at least one of the exemplary embodiments as well as other objects, advantages, features and uses of said at least one of exemplary embodiments will become evident from the following description of examples taken in conjunction with the accompanying drawings.

BRIEF DESCRIPTION OF THE DRAWINGS

Reference will now be made, by way of example, to the accompanying drawings which show exemplary embodiments of the present application, and in which:

**Figure 1** shows an example of coding-tree unit in accordance with HEVC;

**Figure 2** shows an example of partitioning coding units into prediction units in accordance with HEVC;

**Figure 3** shows an example of a CTU division in accordance with WC;

**Figure 4** shows examples of split modes supported in the multi-type tree partitioning in accordance with WC;

**Figure 5** shows a schematic block diagram of steps of a method 100 of encoding a video picture VP in accordance with prior art;

**Figure 6** shows a schematic block diagram of steps of a method 200 of decoding a video picture VP in accordance with prior art;

**Figure 7** shows an illustrative example for building a whole-block-based AMVP candidate list used to define an inter-predicted block of a current block of a current video picture;

**Figure 8** shows an example of limited motion vector differences in accordance with prior art;

**Figure 9** shows an example of geometric partitioning of a video picture block in accordance with prior art;

**Figure 10** shows examples of geometric block partitioning in accordance with prior art;

**Figure 11** shows an example of representation of an affine motion field of a video picture block in accordance with prior art;

**Figure 12** shows an example of motion vectors associated with subblocks of a video picture block in accordance with prior art;

**Figure 13** shows examples for deriving an affine motion model from translational motion vector relative to control points located at corners of a video picture block in accordance with prior art;

**Figure 14** shows an example for deriving constructed CPMVP candidates by combining translational MVs of neighbor blocks in accordance with prior art;

**Figure 15** shows an illustration of a bilateral matching refinement method in accordance with prior art;

**Figure 16** shows a parsing method of motion information associated with a current block predicted according to BM-AMVP-merge mode from a bitstream in according with prior art.

**Figure 17** shows a parsing of BM-AMVP-merge mode information from the bitstream (step 302) in accordance with prior art;

**Figure 18** shows a motion information derivation method for a current block predicted according to BM-AMVP-merge mode in accordance with prior art;

**Figures 19** shows motion writing/parsing and derivation methods for determining the first motion information of BM-AMVP-merge mode in accordance with one exemplary embodiment;

**Figure 20** shows a motion writing/parsing and derivation method used for determining the second motion information of the BM-AMVP-merge mode in accordance with one exemplary embodiment;

**Figure 21** shows a parsing of BM-AMVP-merge mode information from the bitstream in accordance with one exemplary embodiment;

**Figure 22** shows a motion writing/parsing and derivation method using a parsing of the AMVP part of a BM-AMVP-merge mode information from the bitstream in accordance with one exemplary embodiment;

**Figure 23** shows a variant of the motion writing/parsing and derivation method of **Figure 22** in accordance with one exemplary embodiment; and

**Figure 24** illustrates a schematic block diagram of an example of a system in which various aspects and exemplary embodiments are implemented.

Similar or same elements are referenced with the same reference numbers.

DESCRIPTION OF EXEMPLARY EMBODIMENTS

At least one of the exemplary embodiments is described more fully hereinafter with reference to the accompanying figures, in which examples of at least one of the exemplary embodiments are depicted. An exemplary embodiment may, however, be embodied in many alternate forms and should not be construed as limited to the examples set forth herein. Accordingly, it should be understood that there is no intent to limit exemplary embodiments to the particular forms disclosed. On the contrary, the present application is intended to cover all modifications, equivalents, and alternatives falling within the spirit and scope of the present application.

At least one of the aspects generally relates to video picture encoding and decoding, one other aspect generally relates to transmitting a bitstream provided or encoded and one other aspects relates to receiving/accessing a decoded bitstream.

At least one of the exemplary embodiments is described for encoding/decoding a video picture but extends to the encoding/decoding of video pictures (sequences of pictures) because each video picture is sequentially encoded/decoded as described below.

Moreover, the at least one exemplary embodiments are not limited to MPEG standards such as AVC (ISO/IEC 14496-10 Advanced Video Coding for generic audio-visual services, ITU-T Recommendation H.264, https://www.itu.int/rec/T-REC-H.264-202108-P/en), EVC (ISO/IEC 23094-1 Essential video coding), HEVC (ISO/IEC 23008-2 High Efficiency Video Coding, ITU-T Recommendation H.265, https://www.itu.int/rec/T-REC-H.265-202108-P/en, VVC (ISO/IEC 23090-3 Versatile Video Coding, ITU-T Recommendation H.266, https://www.itu.int/rec/T-REC-H.266-202008-I/en but may be applied to other standards and recommendations such as AV1 (AOMedia Video 1, http://aomedia.org/av1/specification/) for example. The at least one exemplary embodiment may apply to pre-existing or future-developed, and extensions of any such standards and recommendations. Unless indicated otherwise, or technically precluded, the aspects described in the present application may be used individually or in combination.

A pixel corresponds to the smallest display unit on a screen, which can be composed of one or more sources of light (1 for monochrome screen or 3 or more for colour screens).

A video picture, also denoted frame or picture frame, comprises at least one component (also called picture component, or channel) determined by a specific picture/video format which specifies all information relative to pixel values and all information which may be used by a display unit and/or any other device to display and/or to decode video picture data related to said video picture.

A video picture comprises at least one component usually expressed in the shape of an array of samples.

A monochrome video picture comprises a single component and a color video picture may comprise three components.

For example, a color video picture may comprise a luma (or luminance) component and two chroma components when the picture/video format is the well-known (Y,Cb,Cr) format or may comprise three color components (one for Red, one for Green and one for Blue) when the picture/video format is the well-known (R,G,B) format.

Each component of a video picture may comprise a number of samples relative to a number of pixels of a screen on which the video picture is intended to be display. In variants, the number of samples comprised in a component may be a multiple (or fraction) of a number of samples comprised in another component of a same video picture.

For example, in the case of a video format comprising a luma component and two chroma component like the (Y,Cb,Cr) format, dependent on the color format considered, the chroma component may contain half the number of samples in width and/or height, relative to the luma component.

A sample is the smallest visual information unit of a component composing a video picture. A sample value may be, for example a luma or chroma value or a colour value of a (R, G, B) format.

A pixel value is the value of a pixel of a screen. A pixel value may be represented by one sample for monochrome video picture and by multiple co-located samples for color video picture. Co-located samples associated with a pixel mean samples corresponding to the location of a pixel in the screen.

It is common to consider a video picture as being a set of pixel values, each pixel being represented by at least one sample.

A block of a video picture is a set of samples of one component of the video picture. A block of at least one luma sample or a block of at least one chroma sample may be considered when the picture/video format is the well-known (Y,Cb,Cr) format, or a block of at least one color sample when the picture/video format is the well-known (R, G, B) format.

The at least one exemplary embodiment is not limited to a particular picture/video format.

Generally speaking, the present application relates to inter-predicting blocks of a video picture based on inter-prediction data obtained according to a BM-AMVP-merge mode in which subblock-based affine motion model is used for determining either a first motion information of the BM-AMVP-merge mode, a second motion information of the BM-AMVP-merge mode or both the first and the second motion information of the BM-AMVP-merge mode.

The basic idea of the present invention is to enable the combined use of the BM-AMVP-merge mode using subblock-based affine motion model.

One advantage of the present invention is to further enrich the possible ways to represent the motion information at CU-level. Consequently, more diversity is given to the encoder for choosing the way of representing a block's motion information. This increased diversity leads to improved compression efficiency over the state of the art.

Other aspects and advantages of the present application will be described below in particular exemplary embodiments, with reference to the figures.

In one exemplary embodiment, a current video picture block may be inter-predicted based on inter-prediction data obtained according to a BM-AMVP-merge mode in which subblock-based affine motion model is used for determining the first motion information of the BM-AMVP-merge mode.

In one exemplary embodiment, a current video picture block may be inter-predicted based on inter-prediction data obtained according to a BM-AMVP-merge mode in which subblock-based affine motion model is used for determining the second motion information of the BM-AMVP-merge mode.

In one exemplary embodiment, a current video picture block may be inter-predicted based on inter-prediction data obtained according to a BM-AMVP-merge mode in which subblock-based affine motion model is used for determining the first and second motion information of the BM-AMVP-merge mode.

According to these exemplary embodiments, parsing of **Figures 17** is executed for parsing BM-AMVP merge mode information associated with the current block from a bitstream, when the current block is predicted in BM-AMVP merge mode.

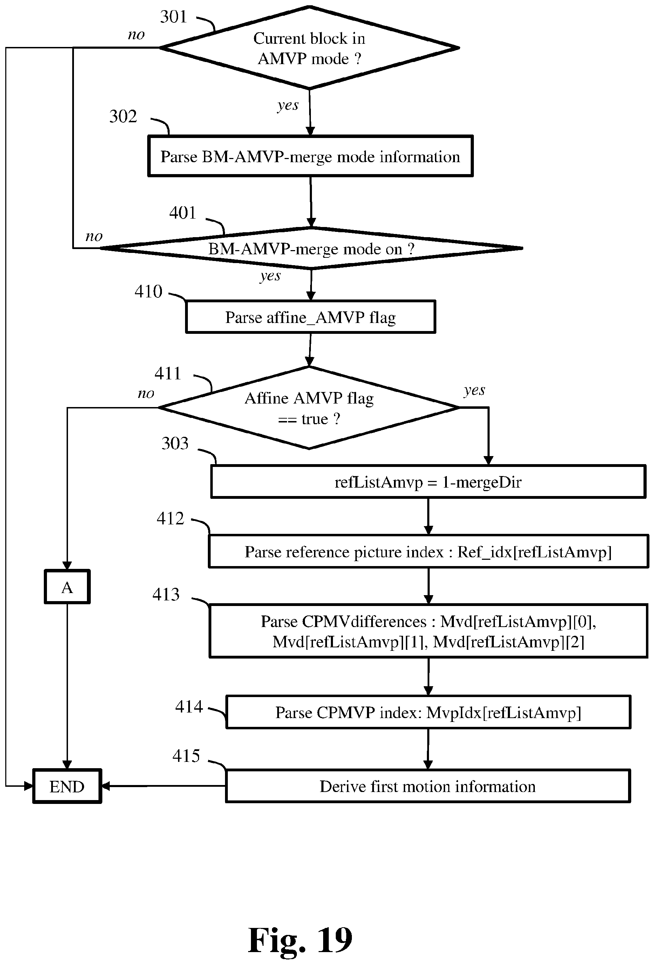

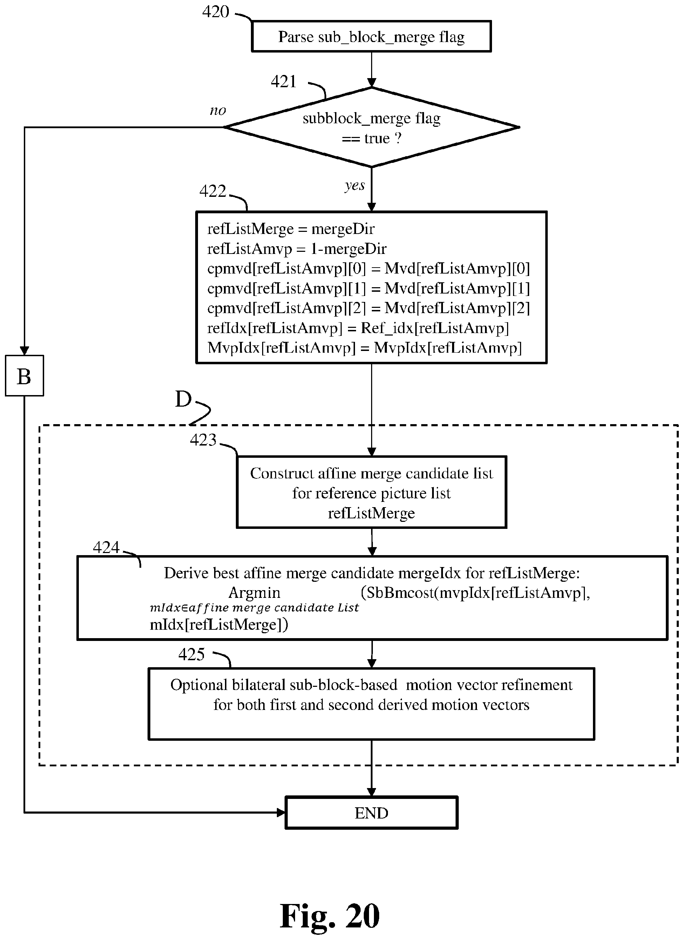

**Figures 19** and **20** show motion writing/parsing and derivation methods based on a BM-AMVP-merge mode information parsed from a bitstream in accordance with one exemplary embodiment. **Figure 19** focuses on determining the first motion information of the BM-AMVP-merge mode and **Figure 20** focuses on determining the second motion information of the BM-AMVP-merge mode.

The motion writing/parsing and derivation methods aim at reconstructing all the inter prediction data associated with a current block. The motion derivation methods runs both at the encoding and decoding sides. **Figures 19** and **20** show motion derivation method using parsing of information from bitstream but one skilled in the art would easily deduce a motion derivation method using an encoding (writing) of information into the bitstream from description of those Figures by replacing the term "parsing", "parse" by "writing", "write".

**Figure 19** shows a motion writing/parsing and derivation method used for determining the first motion information of the BM-AMVP-merge mode information in accordance with one exemplary embodiment.

In step 301, the motion writing/parsing and derivation method checks whether a current block is predicted according to an AMVP mode. If the current block in not predicted according to the AMVP mode, then the method of **Figure 19** is terminated.

Otherwise, in step 302, a BM-AMVP-merge mode information is parsed from the bitstream. Step 302 is detailed on **Figure 17**.

In step 401, the motion writing/parsing and derivation method checks whether an BM-AMVP-merge mode is active for the current block. If not, the motion writing/parsing and derivation method is terminated.

Otherwise, in step 410, an affine_AMVP flag is parsed from the bitstream. The affine AMVP flag indicates whether a subblock-based affine motion model is used for determining the first motion information of the BM-AMVP-merge mode.

In step 411, if the affine_AMVP flag indicates that a subblock-based affine motion model is not used for determining the first motion information of the BM-AMVP-merge mode, step 411 is followed by steps 303-304 (part A of **Figure 16**).

If the affine_AMVP flag indicates that a subblock-based affine motion model is used for determining the first motion information of the BM-AMVP-merge mode, in step 303, flag refListAmvp is set to (1-mergeDir) where mergeDir is obtained from step 302. Indeed, mergeDir corresponds to the reference video picture list for which merge mode is used. Thus refListAmvp is set as the reference picture list index corresponding to the opposite inter direction. Flag refListAmvp indicates a reference video picture list that uses AMVP mode. Next, some affine AMVP motion information is parsed (decoded) from the bitstream according to the flag refListAmvp.

In a variant, one of affine AMVP motion information may be a flag that indicates if a 4- or 6-parameter affine model is used.

In step 412, the reference video picture index Ref_idx[refListAmvp] is parsed from the bitstream. The reference video picture index Ref_idx[refListAmvp] points to a reference video picture of a reference video picture list indicated by refListAmvp.

In step 413, CPMV differences Mvds between CPMVs of control points located at corners of the current block and their CPMVPs are parsed from the bitstream (subblock-based affine AMVP mode). This may involve 2 or 3 CPMV differences Mvd[refListAmvp][k], k=0,1 or 0,1,2 according to the used affine motion model (equation 1 or 2).

In step 414, a CPMVP index MvpIdx[refListAmvp] referring to a CPMVP candidate of an affine AMVP candidate list is parsed from the bitstream. Each CPMVP index MvpIdx[refListAmvp] is associated with a reference video picture of a reference video picture list indicated by refListAmvp.

Step 414 is followed by step 415.In step 415, the first motion information is derived according to the subblock-based affine AMVP mode, as discussed above, based on the above parsed affine AMVP motion information. To do so, control point motion vectors of the block are obtained by adding the parsed CPMV differences to the corresponding CPMVP candidates identified by the parsed CPMVP index. Then, motion vectors are assigned to each sub-block of the current block as discussed above in relation with **Figure 12** and the first motion information of the block may be considered as being those motion vectors assigned to the subblocks of the current block.

A CPMVP candidate list is constructed in relation with the subblock-based affine AMVP mode. The CPMVP candidate list contains only CPMVP candidates associated with references video pictures of a reference video picture list indicated by refListAmvp for which AMVP mode is used.

To do so, the usual CPMVP candidate list construction as done in VVC or in the ECM may be applied. However, for each CPMVP candidate in the constructed CPMV candidate list, only the motion information related to the reference picture identified by the index refListAmvp is kept. The other part of CPMVP information, related to the reference picture list corresponding to inter direction mergeDir, is being discarded from the CPMVP present in the candidate list. In addition, some pruning mechanism may also apply to the CPMVP resulting from this discarding step. Indeed, since the motion information related to one inter-direction, some redundancy between resulting CPMVP candidates may exist. Thus, if two CPMVPs have equal CPMVP motion vector and reference picture index, one of them may be removed from the CPMVP candidate list being constructed.

For the reference picture list indicated by refListAmvp, CPMVs of control points located at corners of the current block are derived from the parsed CPMV differences Mvd[refListAmvp][k], the parsed CPMVP index MvpIdx[refListAmvp] of the CPMVP candidate list and the reference video picture index Ref_idx[mergeDir] as discussed above in relation with **Figure 11**. The affine motion field of the current block is obtained from CPMVs of control points located at corners of the current block as discussed above in relation with equations 1 or 2.

**Figure 20** shows a motion writing/parsing and derivation method used for determining the second motion information of the BM-AMVP-merge mode in accordance with one exemplary embodiment.

The motion writing/parsing and derivation method starts at step 420, assuming that steps 301, 302 and 401 have been executed.

In step 420, a sub_block_merge flag is parsed from the bitstream. The sub_block_merge flag indicates whether a subblock-based affine motion model is used for determining the second motion information of the BM-AMVP-merge mode.

In a variant, the sub_block_merge flag may be the same flag as the affine_AMVP flag.

In step 421, the sub_block_merge flag is checked.

If the sub_block_merge flag indicates that a subblock-based affine motion model is not used for determining the second motion information of the BM-AMVP-merge mode, step 421 is followed by steps 402-405 (part B of **Figure 18**).

If the sub_block_merge flag indicates that a subblock-based affine motion model is used for determining the second motion information of the BM-AMVP-merge mode, some affine merge motion information is parsed (decoded) from the bitstream according to the inter-direction mergeDir (obtained from step 302).

In a variant, one of affine merge motion information may be a flag that indicates if a 4- or 6-parameter affine model is used.

In step 422, refListMerge and refListAMVP flags are assigned to the inter-directions mergeDir and oppositive inter-direction (1-mergeDir). Also, CPMV differences cpmvd[refListAmvp][k] are set to the parsed CPMV differences Mvd[refListAmvp][k] (step 413) with k=0,1 or 0,1,2 according to the used subblock-based affine motion model (equation 1 or 2). Also, reference picture index RefIdx[refListAmvp] is set to the parsed reference picture index Ref_idx[refListAmvp] (step 412) and MvpIdx[RefListAmvp] is set to the parsed CPMV predictor index (step 414).

In step 423, an affine merge candidate list is constructed as discussed above in relation with the subblock-based affine merge mode. The affine merge candidate list contains only CPMVP candidates associated to reference video pictures of the reference picture list indicated by refListMerge.

In a variant, in step 423, all CPMVP candidates of the subblock-based merge mode may be inserted in the affine merge candidate list of step 423. This means not only inherited CPMVP candidates and/or constructed CPMVP candidates but also the SbTMVP candidate may also be included in the affine merge candidate list of step 423.

In another variant, the affine merge candidate list of step 423 may only comprise inherited CPMVP candidates and/or constructed CPMVP candidates.

Moreover, to form a sub-block merge list made of candidates only made of motion vectors associated to the reference picture list refListMerge, the process may re-use the sub-block merge list derivation of VVC or ECM. For each usual sub-block-based merge candidate, only the part of motion information of that candidates relating to the considered reference picture list refListMerge may then be considered for forming the candidates of sub-block-based merge list in the proposed BM-AMVP merge mode extended to affine case. That is, the motion data contained in the derive sub-block-based candidates and associated to the other reference picture list refListAmvp may just be discarded. This discarding step may optionally be followed by some pruning mechanism, consisting in removing duplicated sub-block-based merge candidates, when equal candidates appear in the list, as a result of the discarding.

In step 424, a CPMVP candidate *mergedIdx*[refListMerge] of the affine merge candidate list of step 423 is selected for the current block by minimizing a subblock-based bilateral matching cost SbBmcost.

In a variant, the subblock-based bilateral matching cost SbBmcost may be given by:

$$mergeIdx = \underset{mIdx\ in\ sub-bock\ merge\ candidate\ list}{ArgMin} \left( SbBmcost \begin{pmatrix} MvpIdx[refListAmvp\,], \\ mIdx[refListMerge] \end{pmatrix} \right)$$

where *refListAmvp* is a flag indicating a reference video picture list whose reference video pictures use subblock-based affine AMVP mode, mIdx[refListMerge] is a CPMVP candidate of the affine merge candidate list and mIdx is an index that refers to a CPMVP candidate of the affine merge candidate list.

For example the subblock-based bilateral matching cost SbBmcost may be calculated as a sum of bilateral matching subblock cost $SbBmcost_k$. Each $SbBmcost_k$ depends on a motion vector of the center sample of a subblock k obtained according to equation 1 or 2 (that depends on the CPMVP candidate mIdx[refListMerge]), and an AMVP motion vector of the subblock k equals to an AMVP motion information of the current block for sub-block k . It may correspond to the whole-block-based AMVP motion vector predictor, of the affine AMVP motion vector predictor for sub-block k.

In step 424, the second motion information of the BM-AMVP-merge mode is derived by computing motion vectors assigned to each sub-block of the current block as discussed above in relation with **Figure 12,** based on the CPMVs obtained from the merge index mergeIdx[refListMerge], obtained during the bilateral matching cost minimization of step 424. The second motion information of the current block may be considered as being those motion vectors assigned to the subblocks. At step 425, The first and the second motion information are refined from the bilateral matching refinement as discussed above in relation with **Figure 15,** and the final first and second motion information are then derived as the so-refined motion information.

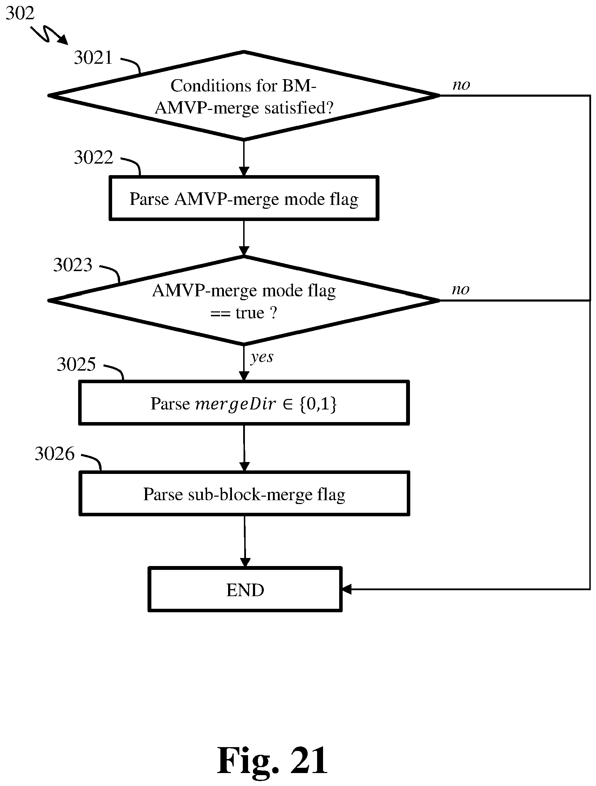

In a variant of the exemplary embodiment of **Figures 19** and **20,** methods of **Figures 16** and **21** may be executed for parsing motion information associated with the current block from a bitstream.

**Figure 21** shows a parsing of BM-AMVP-merge mode information from the bitstream (step 302) in accordance with one exemplary embodiment.

**Figure 21** is quite similar to **Figure 17** but comprises one additional step 3026.

In step 3026, a sub-block-merge flag is parsed from the bitstream. This sub-block-merge flag, if equal to true, indicates that the second motion information is derived from sub-block-based motion data (rather than whole-block-based motion data).

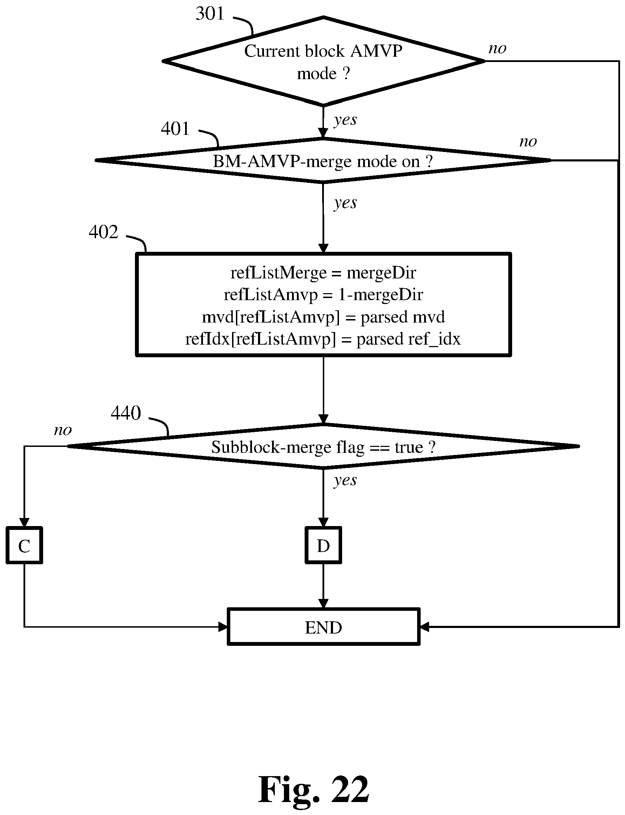

**Figure 22** shows a motion writing/parsing and derivation method using a parsing of the AMVP part of a BM-AMVP-merge mode information from the bitstream in accordance with one exemplary embodiment.

The motion derivation method aims at reconstructing all the inter prediction data associated with a current block. The motion derivation method runs both at the encoding and decoding sides.

**Figure 22** shows motion writing/parsing and derivation method using a parsing of the merge part of a BM-AMVP-merge mode information from the bitstream but one skilled in the art would easily deduce a motion derivation method using an encoding (writing) of the merge part of a BM-AMVP-merge mode information into the bitstream from description of **Figure 22** by replacing the term "parsing", "parse" by "writing", "write".

Steps 301, 401 and 402 have been discussed above.

In step 440, the motion writing/parsing and derivation method checks whether the subblock-merge flag is true.

If the subblock-merge flag is true, the steps of part D of **Figure 20** are executed. Otherwise, the steps of part C of **Figure 18** are executed.

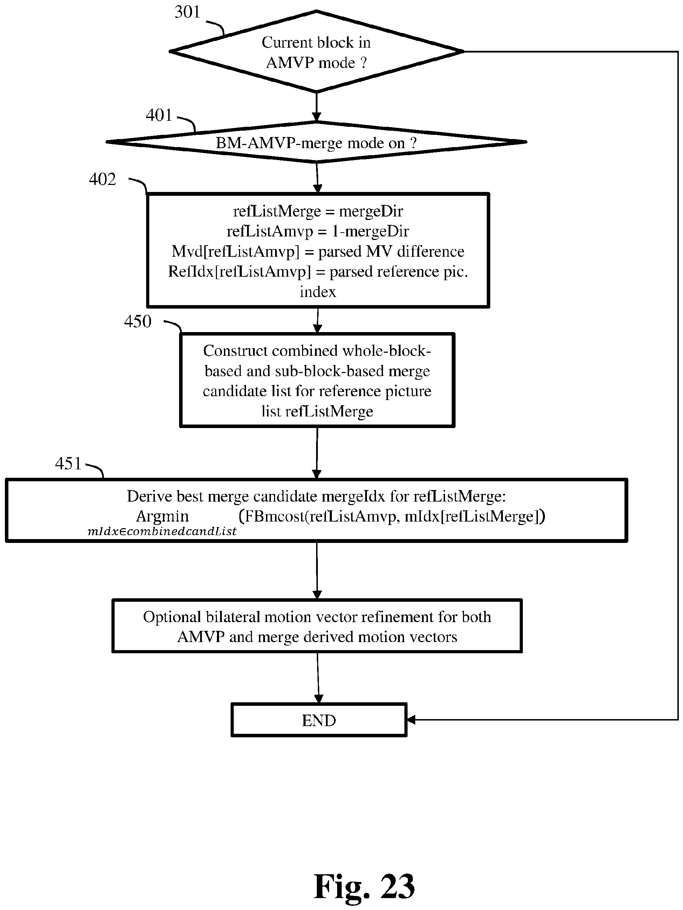

In one variant of the motion writing/parsing and derivation method of **Figure 22,** illustrated on **Figure 23,** parsing methods of **Figures 16** and **17** may be executed for parsing motion information associated with a current block from a bitstream, i.e. the subblock-merge flag is not parsed from the bitstream. Instead, in step 450, a single merge candidate list is derived by mixing the whole-block-based merge candidate list (step 403) with the affine merge candidate list (step 423).

In step 451, the whole-block-based MVP used to derive the second whole-block-based MV and indexed by mergeIdx in the single merge candidate list is selected for the current block by minimizing a bilateral matching cost FBmcost equals either to the Bmcost or the SbBmcost as discussed above depending on whether the MVP candidate in the single merge candidate list belongs to the whole-block-based merge candidate list or the affine merge candidate list.

Thus, the bilateral matching method is used as in the prior art to select the MVP candidate to be used for the current block. Moreover, this variant put the whole-block-based and affine merge candidates in competition, leading to improved quality of the inter-prediction of the current block and thus improving the inter-predictive encoding of said current block.

Alternatively, instead of being derived through this bilateral matching cost minimization procedure of step 451, step 424 or step 404, a merge index mIdx may be encoded/decoded into/from the bitstream (explicitly signaled in the bitstream) to indicate the MVP candidate used to derive the second whole-block-based MV, according to any of the previously presented embodiments.

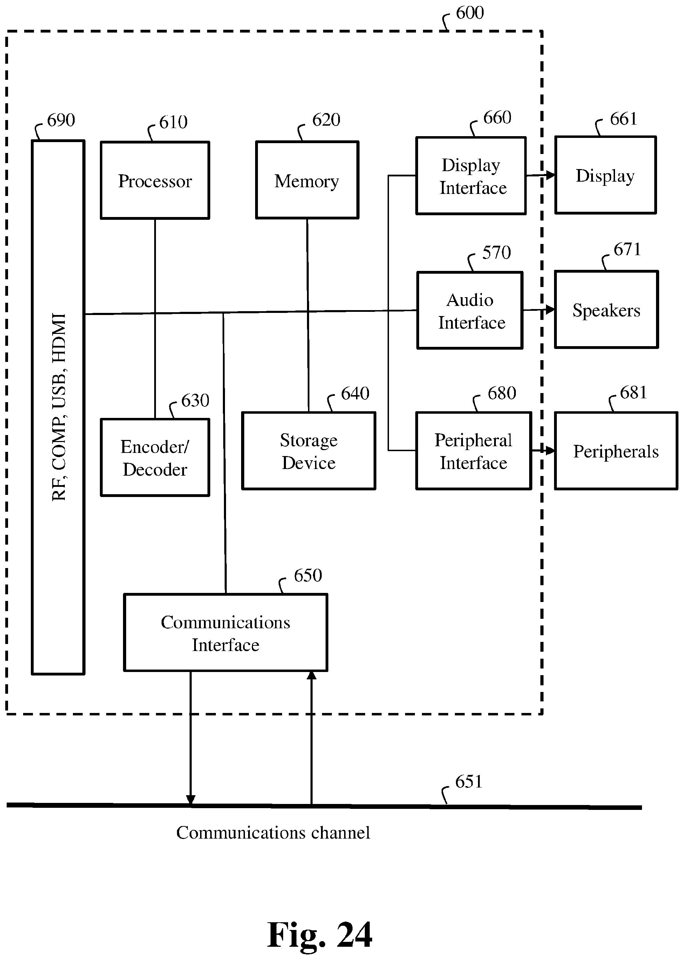

**Figure 24** shows a schematic block diagram illustrating an example of a system 600 in which various aspects and exemplary embodiments are implemented.

System 600 may be embedded as one or more devices including the various components described below. In various exemplary embodiments, system 600 may be configured to implement one or more of the aspects described in the present application.

Examples of equipment that may form all or part of the system 600 include personal computers, laptops, smartphones, tablet computers, digital multimedia set top boxes, digital television receivers, personal video recording systems, connected home appliances, connected vehicles and their associated processing systems, head mounted display devices (HMD, see-through glasses), projectors (beamers), "caves" (system including multiple displays), servers, video encoders, video decoders, post-processors processing output from a video decoder, pre-processors providing input to a video encoder, web servers, video servers (e.g. a broadcast server, a video-on-demand server or a web server), still or video camera, encoding or decoding chip or any other communication devices. Elements of system 600, singly or in combination, may be embodied in a single integrated circuit (IC), multiple ICs, and/or discrete components. For example, in at least one exemplary embodiment, the processing and encoder/decoder elements of system 600 may be distributed across multiple ICs and/or discrete components. In various exemplary embodiments, system 600 may be communicatively coupled to other similar systems, or to other electronic devices, via, for example, a communications bus or through dedicated input and/or output ports.

System 600 may include at least one processor 610 configured to execute instructions loaded therein for implementing, for example, the various aspects described in the present application. Processor 610 may include embedded memory, input output interface, and various other circuitries as known in the art. System 600 may include at least one memory 620 (for example a volatile memory device and/or a non-volatile memory device). System 600 may include a storage device 640, which may include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random-Access Memory (DRAM), Static Random-Access Memory (SRAM), flash, magnetic disk drive, and/or optical disk drive. The storage device 640 may include an internal storage device, an attached storage device, and/or a network accessible storage device, as non-limiting examples.

System 600 may include an encoder/decoder module 630 configured, for example, to process data to provide encoded/decoded video picture data, and the encoder/decoder module 630 may include its own processor and memory. The encoder/decoder module 630 may represent module(s) that may be included in a device to perform the encoding and/or decoding functions. As is known, a device may include one or both encoding and decoding modules. Additionally, encoder/decoder module 630 may be implemented as a separate element of system 600 or may be incorporated within processor 610 as a combination of hardware and software as known to those skilled in the art.

Program code to be loaded onto processor 610 or encoder/decoder 630 to perform the various aspects described in the present application may be stored in storage device 640 and subsequently loaded onto memory 620 for execution by processor 610. In accordance with various exemplary embodiments, one or more of processor 610, memory 620, storage device 640, and encoder/decoder module 630 may store one or more of various items during the performance of the processes described in the present application. Such stored items may include, but are not limited to video picture data, information data used for encoding/decoding video picture data, a bitstream, matrices, variables, and intermediate or final results from the processing of equations, formulas, operations, and operational logic.

In several exemplary embodiments, memory inside of the processor 610 and/or the encoder/decoder module 630 may be used to store instructions and to provide working memory for processing that may be performed during encoding or decoding.

In other exemplary embodiments, however, a memory external to the processing device (for example, the processing device may be either the processor 610 or the encoder/decoder module 630) may be used for one or more of these functions. The external memory may be the memory 620 and/or the storage device 640, for example, a dynamic volatile memory and/or a non-volatile flash memory. In several exemplary embodiments, an external non-volatile flash memory may be used to store the operating system of a television. In at least one exemplary embodiment, a fast external dynamic volatile memory such as a RAM may be used as working memory for video coding and decoding operations, such as for MPEG-2 part 2 (also known as ITU-T Recommendation H.262 and ISO/IEC 13818-2, also known as MPEG-2 Video), AVC, HEVC, EVC, VVC, AV1, etc.

The input to the elements of system 600 may be provided through various input devices as indicated in block 690. Such input devices include, but are not limited to, (i) an RF portion that may receive an RF signal transmitted, for example, over the air by a broadcaster, (ii) a Composite input terminal, (iii) a USB input terminal, (iv) an HDMI input terminal, (v) a bus such as CAN (Controller Area Network), CAN FD (Controller Area Network Flexible Data-Rate), FlexRay (ISO 17458) or Ethernet (ISO/IEC 802-3) bus when the present invention is implemented in the automotive domain.

In various exemplary embodiments, the input devices of block 690 may have associated respective input processing elements as known in the art. For example, the RF portion may be associated with elements necessary for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which may be referred to as a channel in certain exemplary embodiments, (iv) demodulating the down-converted and band-limited signal, (v) performing error correction, and (vi) demultiplexing to select the desired stream of data packets. The RF portion of various exemplary embodiments may include one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down-converting the received signal to a lower frequency (for example, an intermediate frequency or a near-baseband frequency) or to baseband.

In one set-top box embodiment, the RF portion and its associated input processing element may receive an RF signal transmitted over a wired (for example, cable) medium. Then, the RF portion may perform frequency selection by filtering, down-converting, and filtering again to a desired frequency band.

Various exemplary embodiments rearrange the order of the above-described (and other) elements, remove some of these elements, and/or add other elements performing similar or different functions.

Adding elements may include inserting elements in between existing elements, such as, for example, inserting amplifiers and an analog-to-digital converter. In various exemplary embodiments, the RF portion may include an antenna.

Additionally, the USB and/or HDMI terminals may include respective interface processors for connecting system 600 to other electronic devices across USB and/or HDMI connections. It is to be understood that various aspects of input processing, for example, Reed-Solomon error correction, may be implemented, for example, within a separate input processing IC or within processor 610 as necessary. Similarly, aspects of USB or HDMI interface processing may be implemented within separate interface ICs or within processor 610 as necessary. The demodulated, error corrected, and demultiplexed stream may be provided to various processing elements, including, for example, processor 610, and encoder/decoder 630 operating in combination with the memory and storage elements to process the data stream as necessary for presentation on an output device.

Various elements of system 600 may be provided within an integrated housing. Within the integrated housing, the various elements may be interconnected and transmit data therebetween using suitable connection arrangement 690, for example, an internal bus as known in the art, including the 12C bus, wiring, and printed circuit boards.

The system 600 may include communication interface 650 that enables communication with other devices via communication channel 651. The communication interface 650 may include, but is not limited to, a transceiver configured to transmit and to receive data over communication channel 651. The communication interface 650 may include, but is not limited to, a modem or network card and the communication channel 651 may be implemented, for example, within a wired and/or a wireless medium.

Data may be streamed to system 600, in various exemplary embodiments, using a Wi-Fi network such as IEEE 802.11. The Wi-Fi signal of these exemplary embodiments may be received over the communications channel 651 and the communications interface 650 which are adapted for Wi-Fi communications. The communications channel 651 of these exemplary embodiments may be typically connected to an access point or router that provides access to outside networks including the Internet for allowing streaming applications and other over-the-top communications.

Other exemplary embodiments may provide streamed data to the system 600 using a set-top box that delivers the data over the HDMI connection of the input block 690.

Still other exemplary embodiments may provide streamed data to the system 600 using the RF connection of the input block 690.

The streamed data may be used as a way for signaling information used by the system 600. The signaling information may comprise the bitstream B and/or information such a number of pixels of a video picture and/or any coding/decoding setup parameters.

It is to be appreciated that signaling may be accomplished in a variety of ways. For example, one or more syntax elements, flags, and so forth may be used to signal information to a corresponding decoder in various exemplary embodiments.

System 600 may provide an output signal to various output devices, including a display 661, speakers 671, and other peripheral devices 681. The other peripheral devices 681 may include, in various examples of exemplary embodiments, one or more of a stand-alone DVR, a disk player, a stereo system, a lighting system, and other devices that provide a function based on the output of system 600.

In various exemplary embodiments, control signals may be communicated between the system 600 and the display 661, speakers 671, or other peripheral devices 681 using signaling such as AV.Link (Audio/Video Link), CEC (Consumer Electronics Control), or other communications protocols that enable device-to-device control with or without user intervention.

The output devices may be communicatively coupled to system 600 via dedicated connections through respective interfaces 660, 670, and 680.

Alternatively, the output devices may be connected to system 600 using the communications channel 651 via the communications interface 650. The display 661 and speakers 671 may be integrated in a single unit with the other components of system 600 in an electronic device such as, for example, a television.

In various exemplary embodiments, the display interface 660 may include a display driver, such as, for example, a timing controller (T Con) chip.

The display 661 and speaker 671 may alternatively be separate from one or more of the other components, for example, if the RF portion of input 690 is part of a separate set-top box. In various exemplary embodiments in which the display 661 and speakers 671 may be external components, the output signal may be provided via dedicated output connections, including, for example, HDMI ports, USB ports, or COMP outputs.

In **Figures 1-24,** various methods are described herein, and each of the methods includes one or more steps or actions for achieving the described method. Unless a specific order of steps or actions is required for proper operation of the method, the order and/or use of specific steps and/or actions may be modified or combined.

Some examples are described with regard to block diagrams and/or operational flowcharts. Each block represents a circuit element, module, or portion of code which includes one or more executable instructions for implementing the specified logical function(s). It should also be noted that in other implementations, the function(s) noted in the blocks may occur out of the indicated order. For example, two blocks shown in succession may, in fact, be executed substantially concurrently or the blocks may sometimes be executed in the reverse order, depending on the functionality involved.

The implementations and aspects described herein may be implemented in, for example, a method or a process, an apparatus, a computer program, a data stream, a bitstream, or a signal. Even if only discussed in the context of a single form of implementation (for example, discussed only as a method), the implementation of features discussed may also be implemented in other forms (for example, an apparatus or computer program).

The methods may be implemented in, for example, a processor, which refers to processing devices in general, including, for example, a computer, a microprocessor, an integrated circuit, or a programmable logic device. Processors also include communication devices.

Additionally, the methods may be implemented by instructions being performed by a processor, and such instructions (and/or data values produced by an implementation) may be stored on a computer readable storage medium. A computer readable storage medium may take the form of a computer readable program product embodied in one or more computer readable medium(s) and having computer readable program code embodied thereon that is executable by a computer. A computer readable storage medium as used herein may be considered a non-transitory storage medium given the inherent capability to store the information therein as well as the inherent capability to provide retrieval of the information therefrom. A computer readable storage medium may be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present exemplary embodiments may be applied, is merely an illustrative and not an exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

An apparatus may be implemented in, for example, appropriate hardware, software, and firmware. Examples of such apparatus include personal computers, laptops, smartphones, tablet computers, digital multimedia set top boxes, digital television receivers, personal video recording systems, connected home appliances, head mounted display devices (HMD, see-through glasses), projectors (beamers), "caves" (system including multiple displays), servers, video encoders, video decoders, post-processors processing output from a video decoder, pre-processors providing input to a video encoder, web servers, set-top boxes, and any other device for processing video pictures or other communication devices. As should be clear, the equipment may be mobile and even installed in a mobile vehicle.

Computer software may be implemented by the processor 610 or by hardware, or by a combination of hardware and software. As a non-limiting example, the exemplary embodiments may be also implemented by one or more integrated circuits. The memory 620 may be of any type appropriate to the technical environment and may be implemented using any appropriate data storage technology, such as optical memory devices, magnetic memory devices, semiconductor-based memory devices, fixed memory, and removable memory, as non-limiting examples. The processor 610 may be of any type appropriate to the technical environment, and may encompass one or more of microprocessors, general purpose computers, special purpose computers, and processors based on a multi-core architecture, as non-limiting examples.

As will be evident to one of ordinary skill in the art, implementations may produce a variety of signals formatted to carry information that may be, for example, stored or transmitted. The information may include, for example, instructions for performing a method, or data produced by one of the described implementations. -For example, a signal may be formatted to carry the bitstream of a described exemplary embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

The terminology used herein is for the purpose of describing particular exemplary embodiments only and is not intended to be limiting. As used herein, the singular forms "a", "an", and "the" may be intended to include the plural forms as well, unless the context clearly indicates otherwise. It will be further understood that the terms "includes/comprises" and/or "including/comprising" when used in this specification, may specify the presence of stated, for example, features, integers, steps, operations, elements, and/or components but do not preclude the presence or addition of one or more other features, integers, steps, operations, elements, components, and/or groups thereof. Moreover, when an element is referred to as being "responsive" or "connected" or "associated with" to another element, it may be directly responsive or connected to or associated with the other element, or intervening elements may be present. In contrast, when an element is referred to as being "directly responsive" or "directly connected" to or "directly associated with" other element, there are no intervening elements present.

It is to be appreciated that the use of any of the symbol/term "/", "and/or", and "at least one of", for example, in the cases of "A/B", "A and/or B" and "at least one of A and B", may be intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Various numeric values may be used in the present application. The specific values may be for example purposes and the aspects described are not limited to these specific values.

It will be understood that, although the terms first, second, etc. may be used herein to describe various elements, these elements are not limited by these terms. These terms are only used to distinguish one element from another. For example, a first element could be termed a second element, and, similarly, a second element could be termed a first element without departing from the teachings of the present application. No ordering is implied between a first element and a second element.

Reference to "one exemplary embodiment" or "an exemplary embodiment" or "one implementation" or "an implementation", as well as other variations thereof, is frequently used to convey that a particular feature, structure, characteristic, and so forth (described in connection with the exemplary embodiment/implementation) is included in at least one exemplary embodiment/implementation. Thus, the appearances of the phrase "in one exemplary embodiment" or "in an exemplary embodiment" or "in one implementation" or "in an implementation", as well any other variations, appearing in various places throughout the present application are not necessarily all referring to the same exemplary embodiment.

Similarly, reference herein to "in accordance with an exemplary embodiment/example/implementation" or "in an exemplary embodiment/example/implementation", as well as other variations thereof, is frequently used to convey that a particular feature, structure, or characteristic (described in connection with the exemplary embodiment/example/implementation) may be included in at least one exemplary embodiment/example/implementation. Thus, the appearances of the expression "in accordance with an exemplary embodiment/example/implementation" or "in an exemplary embodiment/example/implementation" in various places in the present application are not necessarily all referring to the same exemplary embodiment/example/implementation, nor are separate or alternative exemplary embodiment/examples/implementation necessarily mutually exclusive of other exemplary embodiments/examples/implementation.

Reference numerals appearing in the claims are by way of illustration only and shall have no limiting effect on the scope of the claims. Although not explicitly described, the present exemplary embodiments/examples and variants may be employed in any combination or sub-combination.

When a figure. is presented as a flow diagram, it should be understood that it also provides a block diagram of a corresponding apparatus. Similarly, when a figure is presented as a block diagram, it should be understood that it also provides a flow diagram of a corresponding method/process.

Although some of the diagrams include arrows on communication paths to show a primary direction of communication, it is to be understood that communication may occur in the opposite direction to the depicted arrows.

Various implementations involve decoding. "Decoding", as used in this application, may encompass all or part of the processes performed, for example, on a received video picture (including possibly a received bitstream which encodes one or more video picture) in order to produce a final output suitable for display or for further processing in the reconstructed video domain. In various exemplary embodiments, such processes include one or more of the processes typically performed by a decoder. In various exemplary embodiments, such processes also, or alternatively, include processes performed by a decoder of various implementations described in the present application, for example,

As further examples, in one exemplary embodiment "decoding" may refer only to de-quantizing, in one exemplary embodiment "decoding" may refer to entropy decoding, in another exemplary embodiment "decoding" may refer only to differential decoding, and in another exemplary embodiment "decoding" may refer to combinations of de-quantizing, entropy decoding and differential decoding. Whether the phrase "decoding process" may be intended to refer specifically to a subset of operations or generally to the broader decoding process will be clear based on the context of the specific description and is believed to be well understood by those skilled in the art.

Various implementations involve encoding. In an analogous way to the above discussion about "decoding", "encoding" as used in the present application may encompass all or part of the processes performed, for example, on an input video picture in order to produce an output bitstream. In various exemplary embodiments, such processes include one or more of the processes typically performed by an encoder. In various exemplary embodiments, such processes also, or alternatively, include processes performed by an encoder of various implementations described in this application.

As further examples, in one exemplary embodiment "encoding" may refer only to quantizing, in one exemplary embodiment "encoding" may refer only to entropy encoding, in another exemplary embodiment "encoding" may refer only to differential encoding, and in another exemplary embodiment "encoding" may refer to combinations of quantizing, differential encoding and entropy encoding. Whether the phrase "encoding process" may be intended to refer specifically to a subset of operations or generally to the broader encoding process will be clear based on the context of the specific descriptions and is believed to be well understood by those skilled in the art.

Additionally, the present application may refer to "obtaining" various pieces of information. Obtaining the information may include one or more of, for example, estimating the information, calculating the information, predicting the information, or retrieving the information from memory, processing the information, moving the information, copying the information, erasing the information, calculating the information, determining the information, predicting the information, or estimating the information.

Additionally, this application may refer to "receiving" various pieces of information. Receiving the information may include one or more of, for example, accessing the information, or receiving information from a communication network.

Also, as used herein, the word "signal" refers to, among other things, indicating something to a corresponding decoder. For example, in certain exemplary embodiments the encoder signals a particular information such as coding parameter or encoded video picture data. In this way, in an exemplary embodiment the same parameter may be used at both the encoder side and the decoder side. Thus, for example, an encoder may transmit (explicit signaling) a particular parameter to the decoder so that the decoder may use the same particular parameter. Conversely, if the decoder already has the particular parameter as well as others, then signaling may be used without transmitting (implicit signaling) to simply allow the decoder to know and select the particular parameter. By avoiding transmission of any actual functions, a bit savings is realized in various exemplary embodiments. It is to be appreciated that signaling may be accomplished in a variety of ways. For example, one or more syntax elements, flags, and so forth are used to signal information to a corresponding decoder in various exemplary embodiments. While the preceding relates to the verb form of the word "signal", the word "signal" may also be used herein as a noun.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method for encoding a video picture into a bitstream of encoded video picture data, the method comprising a bilateral matching AMVP-merge mode for determining an inter-predicted block of a block of the video picture, said inter-predicted block being derived from a first motion information associated with a reference video picture of a reference picture list, and from a second motion information associated with a reference video picture of another reference picture list, wherein subblock-based motion model is used for determining either the first motion information or the second motion information or both.

2. A method for decoding a video picture into a bitstream of encoded video picture data, the method comprising a bilateral matching AMVP-merge mode for determining an inter-predicted block of a block of the video picture, said inter-predicted block being derived from a first motion information associated with a reference video picture of a reference picture list, and from a second motion information associated with a reference video picture of another reference picture list, wherein subblock-based motion model is used for determining either the first motion information or the second motion information or both.

3. The method of claim 1 or 2, wherein the method further comprises encoding/decoding (410) a syntax element (affine_AMVP flag) indicating whether the subblock-based affine motion model is used for determining the first motion information.

4. The method of claim 1, wherein the method further comprises encoding/decoding (420) a syntax element (sub_block_merge flag) indicating whether the subblock-based affine motion model is used for determining the second motion information.

5. The method of claim 1, wherein the method further comprises encoding/decoding a syntax element indicating whether the subblock-based affine motion model is used for determining the first and second motion information.

6. The method of one of claims 1 to 5, wherein the method further comprises encoding/decoding a motion vector predictor index (mIdx) of a motion vector predictor index list, and the second motion information is determined from said motion vector predictor index.

7. The method of claims 1 to 6, where the first motion information is derived from an affine AMVP motion coding mode.

8. The method of claim 7, where deriving a representation of first motion information from an affine AMVP motion coding mode comprises constructing a candidate list of affine motion predictors, where each candidate includes affine motion information associated with a reference picture list associated with the first motion information.

9. The method of claims 1 to 8, where the second motion information is derived from a sub-block merge motion coding mode.

10. The method of claim 9, where deriving a representation of second motion information from a sub-block merge motion coding mode comprises constructing a candidate list of sub-block-based merge motion predictors, where each candidate includes sub-block-based motion information associated with a reference picture list associated with second motion information.

11. The method of claim 10, where the sub-block-based merge motion predictors only contain affine merge motion predictors.

12. A bitstream, formatted to include encoded video picture data and information data obtained from a method of one of claims 1, 3 to 10.

13. An apparatus comprising means for performing one of the method claimed in any one of claims 1 to 10.

14. A computer program product including instructions which, when the program is executed by one or more processors, causes the one or more processors to carry out a method claimed in any one of claims 1 to 10.

15. A non-transitory storage medium carrying instructions of program code for executing a method claimed in any one of claims 1 to 10.

**Fig. 1**

NxN     2Nx2N     Nx2N     2NxN

nLx2N     nLx2N     2NxnU     2NxnD

**Fig. 2**

# Fig. 3

# Fig. 4

**Fig. 5**

200

210  220  230  240

250

260

DPB

270

# Fig. 6

## Fig. 7

L0 reference

L1 reference

## Fig. 8

Reference picture          Current picture          Reference picture

## Fig. 9

**Fig. 10**

**Fig. 11**

**Fig. 12**

$(x_0,y_0)$  $(x_1,y_1)$

$\overrightarrow{v_0}$  $\overrightarrow{v_1}$

$(x_2,y_2)$  $(x_3,y_3)$  Current block

$\overrightarrow{v_2}$  $\overrightarrow{v_3}$

$\overrightarrow{v_4}$  A

$(x_4,y_4)$

# Fig. 13

| B2 | B3 | | B1 | B0 |
| A2 | | | | |
| | Current block | | | |
| A1 | | | | |
| A0 | | | T | |

# Fig. 14

Motion trajectory

MV0

MV1

Cur block

Ref0  Cur Pic  Ref1

TD0  TD1

# Fig. 15

301 — Current block in AMVP mode ? — no

yes

A

302 — Parse BM-AMVP-merge mode information

303 — refListAmvp = 1-mergeDir

304 — Parse AMVP prediction data for ref pic list refListAmvp :
Ref_idx[refListAmvp], Mvd[refListAmvp],
mvpIdx[refListAmvp]

END

**Fig. 16**

302

3021 — Conditions for BM-AMVP-merge satisfied? — no

yes

3022 — Parse AMVP-merge mode flag

3023 — AMVP-merge mode flag == true ? — no

yes

3025 — Parse $mergeDir \in \{L0, L1\}$

END

**Fig. 17**

**301** Current block in AMVP mode ? — *no*

*yes*

**401** BM-AMVP-merge mode on ? — *no*

*yes*

B

**402** refListMerge = mergeDir
refListAmvp = 1-mergeDir
Mvd[refListAmvp] = parsed MV difference
RefIdx[refListAmvp] = parsed reference pic. index
MvpIdx[refListAmvp] = parsed AMVP index

C

**403** Construct merge MVP candidate list for reference picture list refListMerge

**404** Derive best merge candidate mergeIdx for refListMerge:
$$\underset{mIdx \in mergeList}{Argmin} (Bmcost(MvpIdx[refListAmvp], mIdx[refListMerge])$$

**405** Optional bilateral motion vector refinement for both AMVP and merge derived motion vectors

END

**Fig. 18**

**Fig. 19**

420 — Parse sub_block_merge flag

421 —
subblock_merge flag
== true ?

*no*

*yes*

422 —
refListMerge = mergeDir
refListAmvp = 1-mergeDir
cpmvd[refListAmvp][0] = Mvd[refListAmvp][0]
cpmvd[refListAmvp][1] = Mvd[refListAmvp][1]
cpmvd[refListAmvp][2] = Mvd[refListAmvp][2]
refIdx[refListAmvp] = Ref_idx[refListAmvp]
MvpIdx[refListAmvp] = MvpIdx[refListAmvp]

B

D

423 —
Construct affine merge candidate list
for reference picture list
refListMerge

424 —
Derive best affine merge candidate mergeIdx for refListMerge:
$\underset{mIdx \in affine\ merge\ candidate\ List}{Argmin}$ (SbBmcost(mvpIdx[refListAmvp],
mIdx[refListMerge])

425 —
Optional bilateral sub-block-based motion vector refinement
for both first and second derived motion vectors

END

# Fig. 20

302

3021 — Conditions for BM-AMVP-merge satisfied? — *no*

3022 — Parse AMVP-merge mode flag

3023 — AMVP-merge mode flag == true ? — *no*

*yes*

3025 — Parse $mergeDir \in \{0,1\}$

3026 — Parse sub-block-merge flag

END

# Fig. 21

301 — Current block AMVP mode ? — no

yes

401 — BM-AMVP-merge mode on ? — no

yes

402 —
refListMerge = mergeDir
refListAmvp = 1-mergeDir
mvd[refListAmvp] = parsed mvd
refIdx[refListAmvp] = parsed ref_idx

440 — no — Subblock-merge flag == true ? — yes

C

D

END

**Fig. 22**

301 — ⟨ Current block in
AMVP mode ? ⟩

401 — ⟨ BM-AMVP-merge mode on ? ⟩

402 —
```
refListMerge = mergeDir
refListAmvp = 1-mergeDir
Mvd[refListAmvp] = parsed MV difference
RefIdx[refListAmvp] = parsed reference pic.
index
```

450 —
```
Construct combined whole-block-
based and sub-block-based merge
candidate list for reference picture
list refListMerge
```

451 —
Derive best merge candidate mergeIdx for refListMerge:
$$\underset{mIdx \in combinedcandList}{Argmin} (FBmcost(refListAmvp, mIdx[refListMerge])$$

Optional bilateral motion vector refinement for both
AMVP and merge derived motion vectors

END

**Fig. 23**

**Fig. 24**

Europäisches
Patentamt

European
Patent Office

Office européen
des brevets

# EUROPEAN SEARCH REPORT

Application Number

EP 22 30 5469

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ZHANG (QUALCOMM) Z ET AL: "EE2-related: Bilateral matching AMVP-merge mode", 23. JVET MEETING; 20210707 - 20210716; TELECONFERENCE; (THE JOINT VIDEO EXPLORATION TEAM OF ISO/IEC JTC1/SC29/WG11 AND ITU-T SG.16 ), , no. JVET-W0106 ; m57223 1 July 2021 (2021-07-01), XP030296049, Retrieved from the Internet: URL:https://jvet-experts.org/doc_end_user/documents/23_Teleconference/wg11/JVET-W0106-v1.zip JVET-W0106-v1.docx [retrieved on 2021-07-01] * the whole document * | 1-15 | INV. H04N19/52 H04N19/513 H04N19/533 H04N19/577 |
| Y | BROWNE A ET AL: "Algorithm description for Versatile Video Coding and Test Model 16 (VTM 16)", 25. JVET MEETING; 20220112 - 20220121; TELECONFERENCE; (THE JOINT VIDEO EXPLORATION TEAM OF ISO/IEC JTC1/SC29/WG11 AND ITU-T SG.16 ), , no. JVET-Y2002 ; m59197 30 March 2022 (2022-03-30), XP030302159, Retrieved from the Internet: URL:https://jvet-experts.org/doc_end_user/documents/25_Teleconference/wg11/JVET-Y2002-v1.zip JVET-Y2002-v1.docx [retrieved on 2022-03-30] * sections 3.4.5-3.4.6 * | 1-15 | |

TECHNICAL FIELDS SEARCHED (IPC)

H04N

The present search report has been drawn up for all claims

| Place of search | Date of completion of the search | Examiner |
|---|---|---|
| Munich | 29 September 2022 | Cordara, Giovanni |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)